# EUROPEAN PATENT APPLICATION

(11) **EP 4 530 700 A1**
(43) Date of publication of application: **02.04.2025**
(21) Application number: 24202239.0
(22) Date of filing: 24.09.2024
(51) Int. Cl.: G02B 27/01

(54) **HEAD-WEARABLE DEVICE CONFIGURED TO ACCOMMODATE MULTIPLE FACIAL PROFILES BY ADJUSTING A DEPTH BETWEEN A LENS AND A WEARER`S FACE, AND METHODS OF USE THEREOF**

(30) Priority: 26.09.2023 US 202363585589 P; 06.06.2024 US 202418736302
(71) Applicant: Meta Platforms Technologies, LLC, Menlo Park, CA 94025 (US)
(72) Inventor: Bethel, Sarah, Menlo Park (US); Peng, Meng, Menlo Park (US)
(74) Representative: Murgitroyd & Company

(57) **Abstract**

A head-wearable device for presenting an extended reality that includes a lens system, and a facial interface. The facial interface includes a portion configured to be coupled with the lens system via an adjustment mechanism assembly and a facial-interface portion configured to be in contact with a wearer's face. The adjustment mechanism assembly is configured to move the facial-interface portion relative to the lens system which changes a depth between a lens of the lens system and the wearer's face (the eye relief) between: (i) a first depth, configured to accommodate a first facial profile associated with a first wearer and (ii) a second depth, configured to accommodate a second facial profile associated with a second wearer.

## Description

### RELATED APPLICATION(S)

This application claims priority to U.S. Provisional Application Serial No. 63/585,589, filed September 26, 2023, entitled "Head-Wearable Device Configured to Accommodate Multiple Facial Profiles by Adjusting a Depth Between a Lens and a Wearer's Face, and Methods and Use Thereof".

### TECHNICAL FIELD

This relates generally to mechanisms for adjusting an eye-relief depth between a lens of a head-wearable device (e.g., an extended-reality headset such as a mixed-reality headset that can present a virtual reality headset) and a wearer's eye, including but not limited to a hook-and-dowel adjustment mechanism assembly which allows the wearer to adjust the depth of the lens to improve eye relief by pushing a button on the head-wearable device and moving a lens holder of the head-wearable device relative to a facial interface of the head-wearable device.

### BACKGROUND

Typical head-worn headset devices are made in only one size. However, there is a wide variety of facial profiles across the population. Differences in facial features (such as brow, nose, and cheekbone size) can affect how a headset device contacts with a wearer's face and, thereby, affect the position of the wearer's eyes relative to the lenses of the headset device. A difference in the position of the wearer's eyes relative to the lenses of the headset device can lead to an eye relief (the distance between the lenses and the wearer's eyes) that is different from the ideal eye relief for using the headset device. A difference between a wearer's actual eye relief and the ideal eye relief can cause eye strain and/or eye fatigue to the wearer and/or presents a larger or smaller field-of-view than intended by the developers of the headset device, which all negatively impact the user experience. Thus, significant portions of the population, which have larger- or smaller-than-average facial features, have a lesser user experience when using typical augmented-reality (AR) devices. In addition, headset device owners will often share their headset device with their friends and family and, thus, a typical headset device will need to accommodate a variety of facial features.

As such, there is a need for a headset device that allows the wearer to easily and quickly adjust an eye relief between the wearer's eyes and the lenses of the headset device. A brief summary of solutions to the issues noted above are described below.

### SUMMARY

The present invention provides a head-wearable device, a facial interface and a method of adjusting eye relief for a facial interface as defined in the appended claims.

One example of a head-wearable device (e.g., an extended-reality headset such as a mixed-reality headset that is capable of displaying a virtual reality to a user) is described herein. This example head-wearable device for presenting a virtual reality comprises a lens system and a facial interface. The facial interface includes a portion configured to be coupled with the lens system via an adjustment mechanism assembly and a facial-interface portion configured to be in contact with a wearer's face. The adjustment mechanism assembly is configured to move the facial-interface portion relative to the lens system which changes a depth between a lens of the lens system and the wearer's face (the depth between a lens of the lens system and the wearer's face being the eye relief) between (i) a first depth, configured to accommodate a first facial profile associated with a first wearer, and (ii) a second depth, configured to accommodate a second facial profile associated with a second wearer. The changing of the depth between the lens of the lens system and the wearer's face corresponds to a change in a depth between a rear portion of the facial interface portion and a wearer's eye.

In accordance with a first aspect, there is provided a head-wearable device, comprising:
a lens system, and
a facial interface, comprising:
   a portion configured to be coupled with the lens system via an adjustment assembly, and
   a facial-interface portion configured to be in contact with a wearer's face,
      wherein,
   the adjustment assembly is configured to move the facial-interface portion relative to the lens system to adjust a depth between a lens of the lens system and the wearer's face,
   including adjusting the depth to:
      (i) a first depth, configured to accommodate a first facial profile associated with a first wearer, and
      (ii) a second depth, configured to accommodate a second facial profile associated with a second wearer,
   wherein the first facial profile is distinct from the second facial profile; and
   a button configured to:
      move the facial-interface portion relative to the lens system when the button is pressed, and
      maintain a position of the facial-interface portion relative to the lens system when the button is released,
         wherein the button is located on an interior surface of the facial interface, wherein the interior surface of the facial interface is a surface that faces a wearer when the head-wearable device is donned by a wearer.

The adjustment assembly may be located at a first side of the facial interface, and the first side may correspond to a left side of a wearer's face, and the head-wearable device may further comprise:
a second adjustment assembly, located opposite of the adjustment assembly, such that the second adjustment assembly is located at a second side of the facial interface, and the second side corresponds to a right side of a wearer's face.

The adjustment assembly may further comprise at least one actuator configured to move the facial-interface portion relative to the lens system.

The head-wearable device of claim 1, wherein the adjustment assembly may further comprise two hooks and a dowel coupled to a spring, wherein:
the dowel is configured to move between the two hooks when the spring is compressed to move the facial interface relative to the lens system, wherein:
(i) when the dowel is located within a first hook of two hooks, the dowel is associated with the first depth, and
(ii) when the dowel is located within a second hook of the two hooks, the dowel located within the second hook is associated with the second depth.

The dowel, the spring, and the two hooks may be configured to not be visible when the head-wearable device is donned.

The lens system and the facial interface may be made of a first material, and the dowel, the spring, and the two hooks may be made of a second material.

The first material may be a metal material.

The second material may be a thermoplastic material.

The depth between the lens of the lens system and the rear portion of the facial interface may determine an eye relief between the lens system and a wearer's eye.

In accordance with a second aspect, there is provided a facial interface, comprising:
a portion configured to be coupled with a lens system via an adjustment assembly, and
a facial-interface portion configured to be in contact with a wearer's face, wherein,
the adjustment assembly is configured to move the facial-interface portion relative to the lens system which changes a depth between a lens of the lens system and the wearer's face, including adjusting the depth to:
   (i) a first depth, configured to accommodate a first facial profile associated with a first wearer, and
   (ii) a second depth, configured to accommodate a second facial profile associated with a second wearer,
      wherein the first facial profile is distinct from the second facial profile, and
a button configured to:
   move the facial-interface portion relative to the lens system when the button is pressed, and
   maintain a position of the facial-interface portion relative to the lens system when the button is released,
   wherein the button is located on an interior surface of the facial interface, wherein the interior surface of the facial interface is a surface that faces a wearer when the head-wearable device is donned by a wearer.

In accordance with a third aspect, there is provided a method of adjusting eye relief for a facial interface, the method comprising:
at a head-wearable device that comprises a facial-interface portion that is configured to be in contact with a wearer's face, and a lens system that is configured to be moved relative to the facial interface via an adjustment assembly:
moving the facial-interface portion of the head-wearable device relative to the lens system of the head-wearable device via the adjustment assembly to a first depth, wherein the first depth is configured to accommodate a first facial profile associated with a first wearer; and
moving the facial-interface portion of the head-wearable device relative to the lens system of the head-wearable device via the adjustment assembly to a second depth, wherein the second depth is configured to accommodate a second facial profile associated with a second wearer, wherein:
   the first facial profile is distinct from the second facial profile, and
   a button configured to:
      move the facial-interface portion relative to the lens system when the button is pressed, and
      maintain a position of the facial-interface portion relative to the lens system when the button is released,
      wherein the button is located on an interior surface of the facial interface, wherein the interior surface of the facial interface is a surface that faces a wearer when the head-wearable device is donned by a wearer.

The adjustment assembly may be located at a first side of the facial interface, and the first side may correspond to a left side of a wearer's face, and wherein the head-wearable device may further comprise:
a second adjustment assembly, located opposite of the adjustment assembly, such that the second adjustment assembly is located at a second side of the facial interface, and the second side corresponds to a right side of a wearer's face.

The adjustment assembly may further comprise at least one actuator configured to move the facial-interface portion relative to the lens system.

The adjustment assembly may further comprise two hooks and a dowel coupled to a spring, wherein:
the dowel is configured move between the two hooks when the spring is compressed to move the facial interface relative to the lens system, wherein:
(i) when the dowel is located within a first hook of two hooks, the dowel is associated with the first depth, and
(ii) when the dowel is located within a second hook of the two hooks, the dowel located within the second hook is associated with the second depth.

The dowel, the spring, and the two hooks may be configured to not be visible when the head-wearable device is donned.

The lens system and the facial interface may be made of a first material, and the dowel, the spring, and the two hooks may be made of a second material.

The first material may be a metal material.

The second material may be a thermoplastic material.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figure 1 illustrates an example head-wearable device configured to allow a wearer to adjust an eye relief depth between a wearer's eye and a lens of the head-wearable device, in accordance with some embodiments.
Figures 2A-2B illustrate an example hook-and-dowel adjustment mechanism assembly for adjusting a depth between a wearer's eye and a lens of the head-wearable device to improve eye relief, in accordance with some embodiments.
Figure 3A illustrates an example visual indicator for indicating a depth of an eye relief mechanism to a user via a user interface displayed at an artificial-reality headset, in accordance with some embodiments.
Figure 3B illustrates an example actuator adjustment mechanism assembly for adjusting a depth of a lens to improve eye relief, in accordance with some embodiments.
Figures 4A, 4B, 4C-1, and 4C-2 illustrate example AR systems, in accordance with some embodiments.
Figures 5A-5B illustrate an example wrist-wearable device, in accordance with some embodiments.
Figures 6A, 6B-1, 6B-2, and 6C illustrate example head-wearable devices, in accordance with some embodiments.
Figures 7A-7B illustrate an example handheld intermediary processing device, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

Embodiments of this disclosure can include or be implemented in conjunction with various types or embodiments of extended-reality systems. Extended-reality (XR), as described herein, is any superimposed functionality and or sensory-detectable presentation provided by an XR system within a user's physical surroundings. Such XRs can include and/or represent virtual reality (VR), AR, mixed-reality (MR), or some combination and/or variation one of these. For example, a user can perform a swiping in-air hand gesture to cause a song to be skipped by a song-providing API providing playback at, for example, a home speaker. An XR environment, as described herein, includes, but is not limited to, MR environments (including non-immersive VR, semi-immersive VR, and fully immersive VR environments); AR environments (including marker-based AR environments, markerless AR environments, location-based AR environments, and projection-based AR environments); hybrid reality; and other types of MR environments. A distinction between MRs and ARs is in their presentation of physical objects in the environment surrounding the headset. An MR headset presents a virtual reconstruction of a physical object from the surrounding physical environment, where the reconstruction, in some embodiments, is produced using data from a camera and/or other sensor(s). In addition, to these virtual reconstructions, other virtual objects and environments are presented, where the other virtual objects and environments do not have a corresponding object in the surrounding physical environment. An AR headset presents pass-through views of physical objects from a surrounding physical environment of the headset (e.g., the user can directly view physical objects in the environment through a transparent lens(es) and/or waveguide(s)). In addition to pass-through views of physical objects, AR augments are presented via a display (e.g., via a display, a projector and waveguide).

XR content can include completely generated content or generated content combined with captured (e.g., real-world) content. The XR content can include video, audio, haptic events, or some combination thereof, any of which can be presented in a single channel or in multiple channels (such as stereo video that produces a three-dimensional effect to a viewer). Additionally, in some embodiments, an XR can also be associated with applications, products, accessories, services, or some combination thereof, which are used, for example, to create content in an XR and/or are otherwise used in (e.g., to perform activities in) an XR.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device) and/or detected via image data captured by an imaging device of a wearable device (e.g., a camera of a head-wearable device)) or a combination of the user's hands. In-air means, in some embodiments, that the user's hand does not contact a surface, object, or portion of an electronic device (e.g., a head-wearable device or other communicatively coupled device, such as the wrist-wearable device), in other words the gesture is performed in open air in a 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single or double finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, time-of-flight sensors, sensors of an inertial measurement unit) detected by a wearable device worn by the user and/or other electronic devices in the user's possession (e.g., smartphones, laptops, imaging devices, intermediary devices, and/or other devices described herein).

As described herein, an eye relief is a distance between an eye and a lens. The devices described herein include methods and systems for using an adjustment mechanism assembly to adjust an eye relief depth between a wearer's eye and at least one lens of a lens system of a head-wearable device.

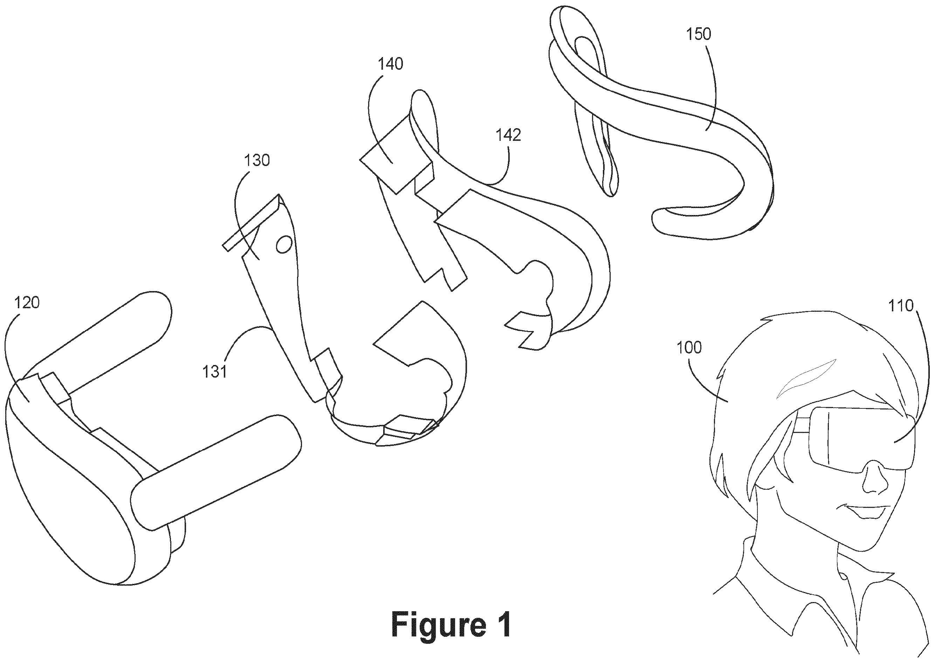

Figure 1 illustrates an example head-wearable device 110 configured to allow a wearer 100 to adjust an eye relief depth, which is a depth between at least one lens of a lens system of the head-wearable device and a wearer's eye, in accordance with some embodiments. In some embodiments, the head-wearable device includes four parts: a lens holder 120, a first frame piece 130, a second frame piece 140, and a facial interface 150. The lens holder 120 is coupled to the first frame piece 130, and, in some embodiments, the lens holder 120 is detachably coupled to the first frame piece 130. The facial interface 150 is coupled to the second frame piece 140, and, in some embodiments, the facial interface 150 is detachably coupled to the second frame piece 140. The first frame piece 130 and the second frame piece 140 are adjustably coupled such that a frame offset distance, which is a distance between a front side of the first frame piece 131 and a rear side of the second frame piece 142, may be changed between at least two distances while the first frame piece 130 and the second frame piece 140 remain coupled. In some embodiments, the head-wearable device 110 is configured such that the wearer 100, can change the eye relief while wearing the head-wearable device 110 and/or while not wearing the head-wearable device 110. In some embodiments, the wearer 100 may change the depth, and thereby, adjust their individual eye relief by interacting with a button, switch, dial, and/or slider located on a surface of the head-wearable device 110 and/or a user interface of the head-wearable device 110.

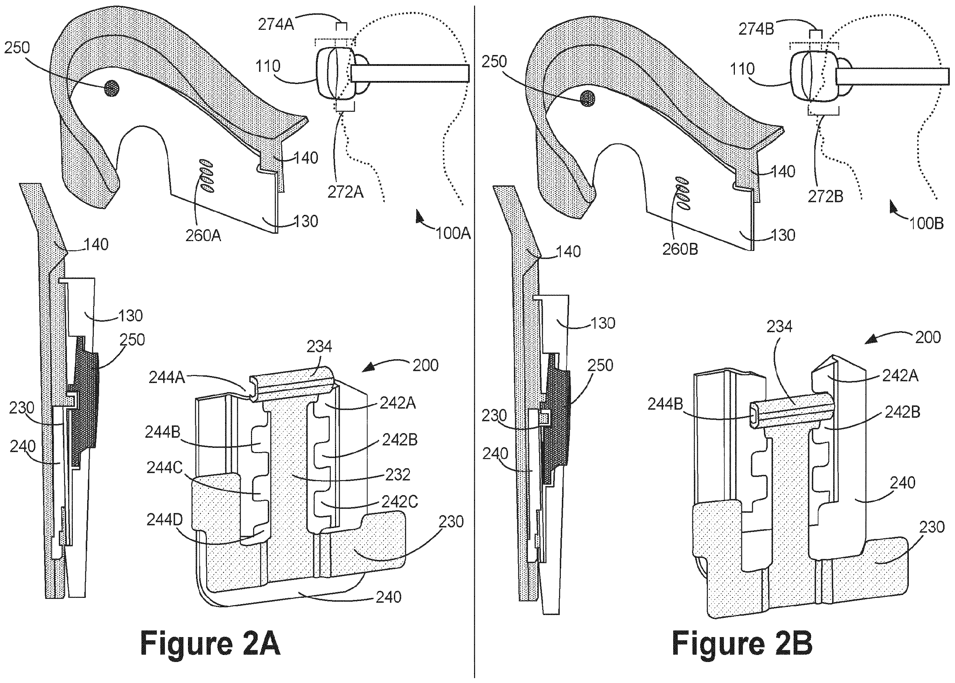

In some embodiments, the head-wearable device 110 is an MR headset configured to present an MR and/or VR. In some embodiments, the lens holder 120 includes electronic components configured to present an MR and/or VR to the wearer 100 while the head-wearable device 110 is worn by the wearer 100. The lens holder 120 includes a lens system with at least two lenses. The facial interface 150 is configured to be in contact with a wearer's face while the head-wearable device 110 is worn by the wearer 100 (e.g., as illustrated in Figure 1). At least one of the lens holder 120, the first frame piece 130, the second frame piece 140, or the facial interface 150 is made of a first material. In some embodiments, the first material is a plastic material, plastic polymer material, and/or a thermoplastic material (e.g., polycarbonate, polyethylene, polypropylene). In some embodiments, the first frame piece 130 and the second frame piece 140 are adjustably coupled by at least one adjustment mechanism assembly (described in further detail in reference to Figures 2A-3B). In some embodiments, at least one adjustment mechanism assembly is not visible to the wearer 100 while wearing the head-wearable device 110. In some embodiments, at least one adjustment mechanism assembly is made of a second material that is distinct from the first material. In some embodiments, at least one adjustment mechanism assembly is made of the first material, or a portion of at least one adjustment mechanism assembly is made of the first material. In some embodiments the second material is a metal material (e.g., aluminum, magnesium, composite, copper, steel, an alloy).

In some embodiments, the first frame piece 130 and the second frame piece 140 are adjustably coupled by at least two adjustment mechanism assemblies. The head-wearable device may be configured such that a first adjustment mechanism assembly is located on a left side of the head-wearable device 110 and a second adjustment mechanism assembly is located on a right side of the head-wearable device 110. The head-wearable device may be configured such that the first adjustment mechanism assembly is located on a top side of the head-wearable device 110 and the second adjustment mechanism assembly is located on a bottom side of the head-wearable device 110. In some embodiments, the first adjustment mechanism assembly is configured to adjust the first frame piece 130 relative to the second frame piece 140 at the same time as the second adjustment mechanism assembly.

In an alternative embodiment, the first frame piece 130 can be integrally formed with lens holder 120 to produce a combined lens-frame portion. In addition, the second frame piece can be integrally formed with the facial interface 150 to produce a combined frame-interface portion. Like the components described above, the combined lens-frame portion is adjustably coupled with the combined frame-interface portion such that an offset distance can be changed between at least two distances while the combined lens-frame portion and the combined frame-interface portion remain coupled.

Figures 2A-2B illustrate an example hook-and-dowel adjustment mechanism assembly 200 for adjusting the eye relief 274A-274B between at least one lens of the lens system of the head-wearable device and the wearer's eye, in accordance with some embodiments. The hook-and-dowel adjustment mechanism assembly 200 adjustably couples the first frame piece 130 to the second frame piece 140. The hook-and-dowel adjustment mechanism assembly 200 includes a hook piece 240, a dowel piece 230, and a button 250. In some embodiments, the hook piece 240 is coupled to the second frame piece 140, and the dowel piece 230 is coupled to the first frame piece 130 (e.g., as illustrated in Figures 2A-2B). In some embodiments, the hook piece 240 is coupled to the first frame piece 130, and the dowel piece is coupled to the second frame piece 140. In some embodiments, the button 250 is located on an interior portion of the head-wearable device 110, which is a portion of the head-wearable device 110 that faces the wearer's face (e.g., as illustrated in Figures 2A-2B). In some embodiments, the button 250 is located on an exterior portion of the head-wearable device 110, which is a portion of the head-wearable device 110 that faces away from the wearer's face.

In accordance with the example embodiment, the hook piece 240 includes at least one hook 242A-242C (e.g., three hooks as illustrated in Figures 2A-2B) and at least two slots 244A-244D (e.g., four slots as illustrated in Figures 2A-2B) adjacent to at least one hook 242A-242C. The dowel piece 230 includes a leaf-spring portion 232 and a dowel portion 234. The dowel piece 230 is configured such that, when the leaf-spring portion 232 is in a relaxed state, the dowel portion 234 is in within one of at least two slots 244A-244D, and when the leaf-spring portion 232 is in a compressed state, the dowel portion 234 is behind the hook piece 240. When the leaf-spring portion 232 is in the relaxed state and dowel portion 234 is within one of at least two slots 244A-244D, the dowel piece 230 cannot be moved relative to the hook piece 240, as the dowel portion is prevented from moving by at least one hook 242A-242C (e.g., as illustrated in Figures 2A-2B). When the leaf-spring portion 232 is in the compressed state and dowel portion 234 is behind the hook piece 240, the dowel piece 230 is able to move relative to the hook piece 240, as the dowel portion 234 is not prevented from moving by the hook piece 240. The button 250 is coupled to the dowel portion 234 such that when the button 250 is unpressed, the leaf-spring portion 232 is in the relaxed state, and the dowel piece 230 cannot be moved relative to the hook piece 240. When the button 250 is pressed, the force of the push is transferred to the dowel portion 234 and the leaf-spring portion 232 enters the compressed state, and the dowel piece 230 can be moved relative to the hook piece 240.

The hook piece 240 is coupled to the second frame piece 140 which is coupled to the facial interface 150, and the dowel piece 230 is coupled to the first frame piece 130 which is coupled to the lens holder 120, and, thus, when the dowel piece 230 is moved relative to the hook piece 240, the eye relief changes. The hook-and-dowel adjustment mechanism assembly 200 is configured such that, when the button 250 is pressed and the leaf-spring portion 232 is in the compressed state, the wearer may move the dowel piece 230 relative to the hook piece 240 by pushing or pulling on the first frame piece 130 and the lens holder 120 and/or the second frame piece 140 and the facial interface 150. The wearer may move the dowel piece 230 relative to the hook piece 240 until the eye relief 274A-274B is at a desired depth. When the eye relief 274A-274B is at the desired depth, the wearer releases the button 250, and the leaf-spring portion 232 enters the relaxed state. When in the relaxed state, the dowel piece 230 cannot be moved relative to the hook piece 240, and the eye relief maintains its depth. In some embodiments, the hook-and-dowel adjustment mechanism assembly 200 may allow the eye relief to change between at least two predetermined depths (e.g., 10 mm, 14 mm, 18 mm, and 22 mm), and, thereby, allow the frame offset distance to change between at least two predetermined distances (e.g., 0 mm, 4 mm, 8 mm, and 12 mm), corresponding, respectively, to at least two slots 244A-244D (e.g., four predetermined depths corresponding to the four slots as illustrated in Figures 2A-2B). In some embodiments, the hook-and-dowel adjustment mechanism assembly 200 may allow the eye relief to change steplessly between a minimum depth and a maximum depth (e.g., between 0 mm and 30 mm), and, thereby, allow the frame offset distance to change steplessly between a minimum distance and a maximum distance (e.g., between 0 mm and 30 mm). In some embodiments, changing the eye relief depth provides a tactile feedback to the wearer 100 (e.g., a feedback provided by the dowl 230 moving along the hook 240).

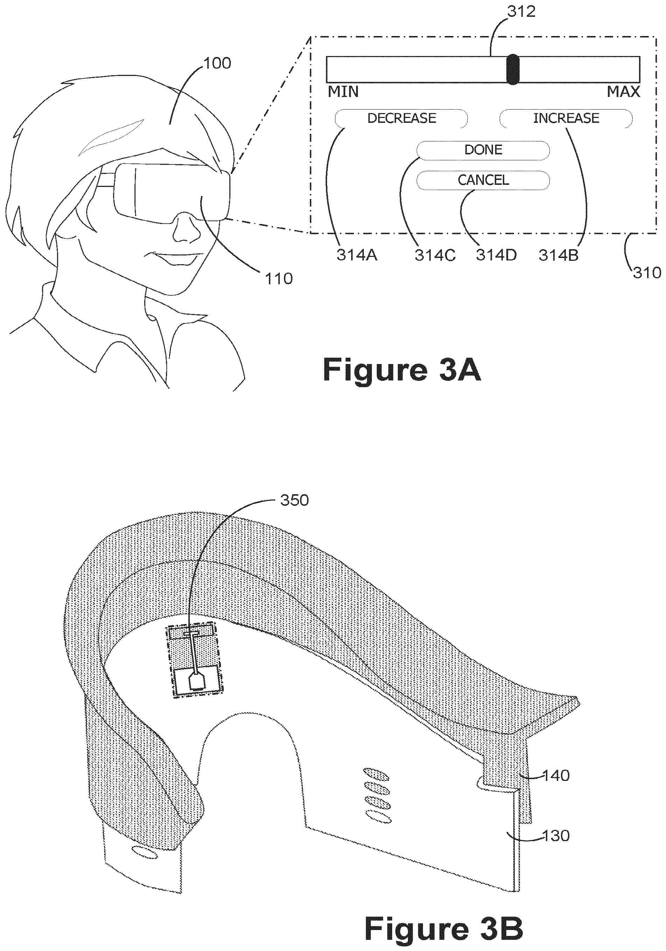

In some embodiments, the head-wearable device further includes a visual indicator to indicate a depth and/or relative depth of the eye relief to the wearer. In some embodiments, the visual indicator is located on a surface of the head-wearable device 110 (e.g., visual indicator 260A-260B which displays between one and four colored circles corresponding to the four predetermined depths as illustrated in Figures 2A-2B). In some embodiments, the visual indicator is displayed via a user interface of the head-wearable device 110 (e.g., as illustrated in Figure 3A).

As an example of how the wearer may change the eye relief, Figures 2A-2B illustrate the dowel piece 230 relative to the hook piece 240 in two different positions, in accordance with some embodiments. Figure 2A illustrates the hook-and-dowel adjustment mechanism assembly 200 in a first position wherein the dowel portion 234 is located in a first slot 244A. In the first position, the frame offset distance is a first offset distance 272A. The first offset distance 272A corresponds to a first eye relief depth, and the visual indicator 260A indicates to the wearer 100 that the eye relief is the first eye relief depth. To change the hook-and-dowel adjustment mechanism 200 from the first position to a second position, the wearer 100 presses the button 250, which causes the spring portion 232 to enter the compressed state, and the dowel portion 234 moves behind the hook piece 240. The wearer 100, while continuing to press the button 250, slides the lens holder 120 and the first frame piece 130 away from the wearer's face. As the wearer 100 slides the lens holder 120 and the first frame piece 130, the dowel portion 234 passes the first hook 242A and moves into a position behind the second slot 244B. The wearer 100 then releases the button 250, which causes the spring portion 232 to enter the relaxed state, and the dowel portion 234 moves into the second slot 244B. Figure 2B illustrates the hook-and-dowel adjustment mechanism 200 in the second position, wherein the dowel portion 234 is located in the second slot 244A. In the second position, the frame offset distance is a second offset distance 272B. The second offset distance 272B corresponds to a second eye relief depth. In the second position, the visual indicator 260B indicates to the wearer 100 that the eye relief is the second eye relief depth. In some embodiments the second offset distance is greater than the first offset distance (e.g., as illustrated in Figures 2A-2B).

A facial profile of the wearer 100 is a factor in determining the eye relief depth. For example, facial features such as a larger-than-average brow, larger-than-average nose, and/or larger-than-average cheekbones would cause the eye relief depth to be longer than an ideal eye relief depth, while facial features such as a smaller-than-average brow, smaller-than-average nose, and/or smaller-than-average cheekbones would cause the eye relief depth to be shorter than the ideal eye relief depth. For example, as shown in Figures 2A-2B, a first wearer 100A has a first facial profile and wears the head-wearable device 110 in the first position, having the first offset distance 272A, which provides the first wearer 100A with the ideal eye relief depth 274A. A second wearer 100B has a second facial profile and wears the head-wearable device 110 in the second position, having the second offset distance 272B, which provides the second wearer 100B with the ideal eye relief depth 274B. In some embodiments, the ideal eye relief depth is an eye relief depth that causes the least amount of eye strain and/or eye fatigue to the wearer 100 and/or presents an intended field-of-view to the wearer 100, while the wearer 100 is wearing the head-wearable device 110.

Figure 3A illustrates an example alternate visual indicator for indicting an eye relief depth and/or relative eye relief depth to the wearer 100 via a user interface (Ul) 310 of the head-wearable device 110. The user interface 310 includes a Ul element 312 indicting an eye relief depth and/or relative eye relief depth to the wearer 100 (i.e., the Ul element indicates the relative eye relief depth between a maximum eye relief depth and a minimum eye relief depth as illustrated in Figure 3A). In some embodiments, the user interface 310 further includes additional Ul elements 314A-314D that allow the wearer 100 to increase the eye relief depth (e.g., additional UI element 314A), decrease the eye relief depth (e.g., additional UI element 314B), set the eye relief depth to a current value (e.g., additional UI element 314C), and/or reset the eye relief depth to a previous value (e.g., additional UI element 314D).

Figure 3B illustrates an example alternative adjustment mechanism assembly. In accordance with some embodiments, the adjustment mechanism assembly that adjustably couples the first frame piece 130 and the second frame piece 140 is an actuator 350. The actuator 250 couples the first frame piece 130 and the second frame piece 140 such that the frame offset distance may be changed between at least two distances, and thereby the eye relief may be changed between at least two depths, while the first frame piece 130 and the second frame piece 140 remain coupled. In some embodiments, the wearer may change the eye relief depth by interacting with the user interface 310 and/or by interacting with a button 250, switch, dial, and/or slider located on a surface of the head-wearable device 110. In some embodiments, the actuator 350 may change the eye relief depth between at least two predetermined eye relief depths. In some embodiments, the actuator 350 may steplessly change the eye relief depth between a minimum eye relief depth and a maximum eye relief depth.

(A1) In accordance with some embodiments, a head-wearable device for presenting a VR comprises a lens system and a facial interface. The facial interface includes a portion configured to be coupled with the lens system via an adjustment mechanism assembly and a facial-interface portion configured to be in contact with a wearer's face. The adjustment mechanism assembly is configured to move the facial-interface portion relative to the lens system which changes a depth between a lens of the lens system and the wearer's face between (i) a first depth, configured to accommodate a first facial profile associated with a first wearer and (ii) a second depth, configured to accommodate a second facial profile associated with a second wearer. In some embodiments, changing the depth between the lens of the lens system and the wearer's face changes a depth between a rear portion of the facial interface portion and a wearer's eye. For example, Figures 1-2B illustrate a head-wearable device 110 that includes a lens system 120 and a facial interface. The example facial interface includes a portion 140 configured to be coupled with the lens system 120 via an adjustment mechanism assembly 200 and a facial interface portion 150 configured to be in contact with a wearer's 100 face. The example adjustment mechanism assembly 200 is configured to move the facial-interface portion 150 relative to the lens system 120 which changes a depth between a lens of the lens system and the wearer's face between (i) a first depth 272A, configured to accommodate a first facial profile associated with a first wearer 100A and (ii) a second depth 272B, configured to accommodate a second facial profile associated with a second wearer 200B.

(A2) In some embodiments of A1, the adjustment mechanism assembly is located at a first side of the facial interface, and the first side corresponds to a left side of a wearer's face. The head-wearable device further includes a second adjustment mechanism assembly, located opposite the adjustment mechanism assembly, such that the second adjustment mechanism is located at a second side of the facial interface, and the second side corresponds to a right side of a wearer's face. In some embodiments, the second adjustment mechanism assembly is configured to move the facial interface relative to the lens system at the same time as the adjustment mechanism assembly. For example, Figures 2A-2B illustrate a head-wearable device 110 with the adjustment mechanism assembly 200 that is located on a first side of the facial interface.

(A3) In some embodiments of any of A1-A2, the adjustment mechanism assembly includes a button. The button is configured to move the facial-interface portion relative to the lens system when the button is pressed and maintain a position of the facial-interface portion relative to the lens system when the button is released. For example, Figures 2A-2B illustrate that the adjustment mechanism assembly 200 includes a button 250 configured to move the facial-interface portion relative to the lens system when the button is pressed. Figures 2A-2B also illustrate that a position of the facial-interface portion relative to the lens system is maintained when the button is released.

(A4) In some embodiments of any of A1-A3, the button is located on an interior surface of the facial interface. In some embodiments, the interior surface of the facial interface is a surface that faces a wearer when the head-wearable device is donned by a wearer. For example, Figures 2A-2B illustrate that button 250 is on the interior surface of the facial interface.

(A5) In some embodiments of any of A1-A4, the button is located on an exterior surface of the facial interface. The exterior surface of the facial interface is a surface that faces away from a wearer when the head-wearable device is donned by a wearer. The facial interface is configured to be adjusted while the head-wearable device is donned.

(A6) In some embodiments of any of A1-A5, the adjustment mechanism further includes at least one actuator configured to move the facial-interface portion relative to the lens system. For example, Figure 3B illustrates an actuator 350 configured to move the facial-interface portion relative to the lens system.

(A7) In some embodiments of any of A1-A6, the adjustment mechanism assembly further includes two hooks and a dowel coupled to a spring. The dowel is configured move between the two hooks when the spring is compressed to move the facial interface relative to the lens system, wherein (i) when the dowel is located within a first hook of two hooks, the dowel is associated with the first depth, and (ii) when the dowel is located within a second hook of the two hooks, the dowel located within the second hook is associated with the second depth. In some embodiments, the spring is connected to the lens system and the two hooks are connected to the facial interface. For example, Figures 2A-2B illustrate the adjustment mechanism assembly including two hooks 242A-242B and a dowel 234 coupled to a spring 232.

(A8) In some embodiments of any of A1-A7, the dowel, the spring, and the two hooks are configured to not be visible when the head-wearable device is donned. For example, Figures 2A-2B illustrate the dowel 234, the spring 232, and the two hooks 242A-242B, each of which is configured to not be visible when the head-wearable device is donned.

(A9) In some embodiments of any of A1-A8, the dowel, the spring, and the two hooks are made of a first material, and the lens system and the facial interface are made of a second material.

(A10) In some embodiments of any of A1-A9, the first material is a metal material.

(A11) In some embodiments of any of A1-A10, the second material is a thermoplastic material.

(A12) In some embodiments of any of A1-A11, the depth between the lens of the lens system and a rear portion of the facial interface can change between 0 millimeters and 30 millimeters. In some embodiments, the depth between the lens of the lens system and a rear portion of the facial interface can change between 0 millimeters and 12 millimeters.

(A13) In some embodiments of any of A1-A12, the adjustment mechanism assembly is configured to change depth between the lens of the lens system and the wearer's face between two predetermined depths. For example, Figures 2A-2B illustrate the two predetermined depths 274A-274B.

(A14) In some embodiments of any of A1-A13, the adjustment mechanism assembly is further configured to change the depth between the lens of lens system and the wearer's face between two additional predetermined depths. In some embodiments, the additional predetermined depths are different from the two predetermined depths.

(A15) In some embodiments of any of A1-A14, changing the depth between the lens of the lens system and a rear portion of the facial interface between a first predetermined depth of the two predetermined depths and a second predetermined depth of the two predetermined depths provides a tactile feedback to a wearer.

(A16) In some embodiments of any of A1-A15, the adjustment mechanism assembly is configured to have a stepless adjustment, such that the depth between the lens of the lens system and a wearer's face can be adjusted without steps.

(A17) In some embodiments of any of A1-A16, the head-wearable device further includes a visual indicator to indicate a depth between the lens of the lens system and the wearer's face.

(A18) In some embodiments of any of A1-A17, the visual indicator is displayed via a user interface of the head-wearable device. For example, Figure 3A illustrates a visual indicator 312 displayed via a user interface 310 of the head-wearable device 110.

(A19) In some embodiments of any of A1-A18, the visual indicator is located on a surface of the head-wearable device. For example, Figures 2A-2B illustrate a visual indicator 260A-260B located on a surface of the head-wearable device.

(A20) In some embodiments of any of A1-A19, the depth between the lens of the lens system and the rear portion of the facial interface determines an eye relief between the lens system and a wearer's eye. For example, Figures 2A-2B illustrate the depth between the lens of the lens system and the rear portion of the facial interface 272A-272B, and the depth defines an eye relief between the lens system and a wearer's eye 274A-274B.

(B1) In accordance with some embodiments, a facial interface comprises a portion configured to be coupled with a lens system via an adjustment mechanism assembly and a facial-interface portion configured to be in contact with a wearer's face. The adjustment mechanism assembly is configured to move the facial-interface portion relative to the lens system which changes a depth between a lens of the lens system and the wearer's face between (i) a first depth, which is configured to accommodate a first facial profile associated with a first wearer, and (ii) a second depth, which is configured to accommodate a second facial profile associated with a second wearer. For example, Figures 1-2B illustrate a facial interface comprising a portion 140 configured to be coupled with a lens system 120 via an adjustment mechanism assembly 200 and a facial-interface portion 150 configured to be in contact with a wearer's 100 face. In the example facial interface 150, the adjustment mechanism assembly 200 is configured to move the facial-interface portion 150 relative to the lens system 120 which changes a depth between a lens of the lens system and the wearer's face between (i) a first depth 274A, which is configured to accommodate a first facial profile associated with a first wearer 100A, and (ii) a second depth 274B, which is configured to accommodate a second facial profile associated with a second wearer 200B.

(B2) In some embodiments of B1, the facial interface is further configured in accordance with any of A1-A20.

(C1) In accordance with some embodiments, a lens system includes a portion configured to be coupled with a facial interface via an adjustment mechanism assembly and at least two lenses. The adjustment mechanism assembly is configured to move the facial-interface relative to the lens system which changes a depth between a lens of at least two lenses and a wearer's face between (i) a first depth, configured to accommodate a first facial profile associated with a first wearer, and (ii) a second depth, configured to accommodate a second facial profile associated with a second wearer. For example, Figures 1-2B illustrate a lens system 120 including a portion 130 configured to be coupled with a facial interface 150 via an adjustment mechanism assembly 200 and at least two lenses. In the example lens system 120, the adjustment mechanism assembly 200 is configured to move the facial interface 150 relative to the lens system 120 which changes a depth between a lens of at least two lenses and a wearer's 100 face between (i) a first depth 274A, configured to accommodate a first facial profile associated with a first wearer 100A, and (ii) a second depth 274B, configured to accommodate a second facial profile associated with a second wearer 100B.

(C2) In some embodiments of C1, the lens system is further configured in accordance with any of A1-A20.

(D1) In accordance with some embodiments, a method of adjusting eye relief for a facial interface occurs at a head-wearable device that includes a facial-interface portion that is configured to be in contact with a wearer's face, and a lens system that is configured to be moved relative to the facial interface via an adjustment mechanism assembly. The method includes, moving the facial-interface portion of the head-wearable device relative to the lens system of the head-wearable device via the adjustment mechanism assembly to a first depth, wherein the first depth is configured to accommodate a first facial profile associated with a first wearer. The method also includes moving the facial-interface portion of the head-wearable device relative to the lens system of the head-wearable device via the adjustment mechanism assembly to a second depth, wherein the second depth is configured to accommodate a second facial profile associated with a second wearer. In some embodiments, the second depth is greater than the first depth. For example, Figures 1-2B illustrate a head-wearable device 110 that includes a lens system 120 and a facial interface. The example facial interface includes a portion 140 configured to be coupled with the lens system 120 via an adjustment mechanism assembly 200 and a facial interface portion 150 configured to be in contact with a wearer's 100 face. The example adjustment mechanism assembly 200 is configured to move the facial-interface portion 150 relative to the lens system 120, which changes a depth between a lens of the lens system and the wearer's face between (i) a first depth 272A, configured to accommodate a first facial profile associated with a first wearer 100A and (ii) a second depth 272B, configured to accommodate a second facial profile associated with a second wearer 200B.

(D2) In some embodiments of D1, the facial interface is further configured in accordance with any of A1-A20.

The devices described above are further detailed below, including systems, wrist-wearable devices, headset devices, and smart textile-based garments. Specific operations described above may occur as a result of specific hardware, such hardware is described in further detail below. The devices described below are not limiting and features on these devices can be removed or additional features can be added to these devices. The different devices can include one or more analogous hardware components. For brevity, analogous devices and components are described below. Any differences in the devices and components are described below in their respective sections.

As described herein, a processor (e.g., a central processing unit (CPU) or microcontroller unit (MCU)) is an electronic component that is responsible for executing instructions and controlling the operation of an electronic device (e.g., a wrist-wearable device 500, a head-wearable device, an HIPD 700, a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or DSPs. As described herein, a graphics module is a component or software module that is designed to handle graphical operations and/or processes, and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM), configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; and (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) POGO pins, which may be small, spring-loaded pins configured to provide a charging interface; (v) wireless charging interfaces; (vi) Global Positioning System (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device); (ii) biopotential-signal sensors; (iii) inertial measurement units (IMUs) for detecting, for example, angular rate, force, magnetic field, and/or changes in acceleration; (iv) heart rate sensors for measuring a user's heart rate; (v) SpO₂ sensors for measuring blood oxygen saturation and/or other biometric data of a user; (vi) capacitive sensors for detecting changes in potential at a portion of a user's body (e.g., a sensor-skin interface) and/or the proximity of other devices or objects; and (vii) light sensors (e.g., time-of-flight sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) electromyography (EMG) sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games, (ii) word processors, (iii) messaging applications, (iv) media-streaming applications, (v) financial applications, (vi) calendars, (vii) clocks, (viii) web browsers, (ix) social media applications, (x) camera applications, (xi) web-based applications, (xii) health applications, and (xiii) artificial-reality (AR) applications, and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA1 00.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). In some embodiments, a communication interface can refer to a software layer that enables different software programs to communicate with each other (e.g., application programming interfaces (APIs) and protocols such as HTTP and TCP/IP).

As described herein, a graphics module is a component or software module that is designed to handle graphical operations and/or processes, and can include a hardware module and/or a software module.

As described herein, non-transitory computer-readable storage media are physical devices or storage medium that can be used to store electronic data in a non-transitory form (e.g., such that the data is stored permanently until it is intentionally deleted or modified).

### Example AR Systems

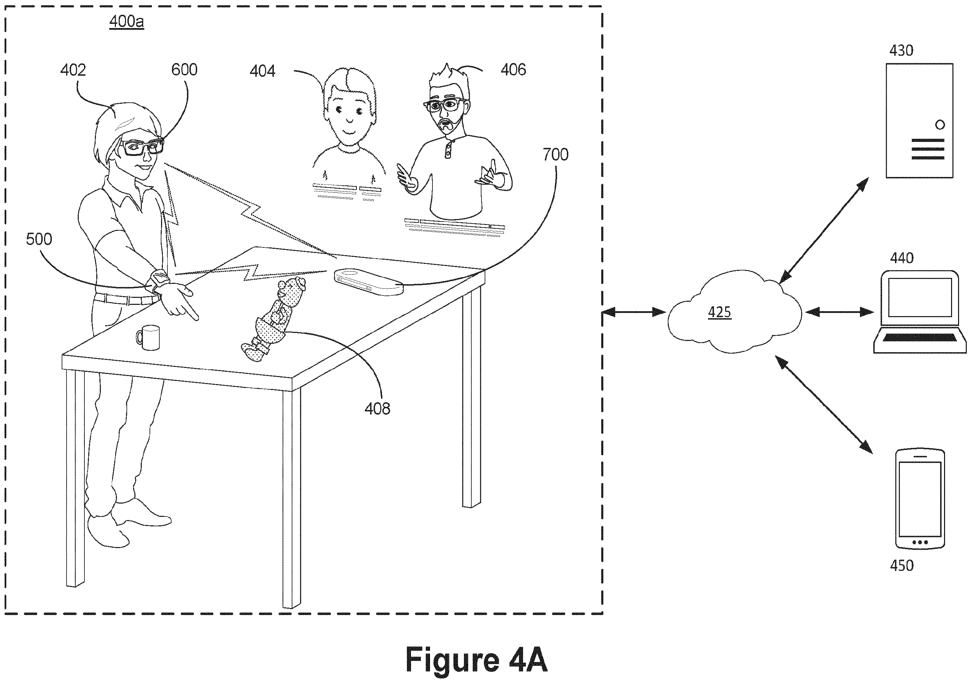

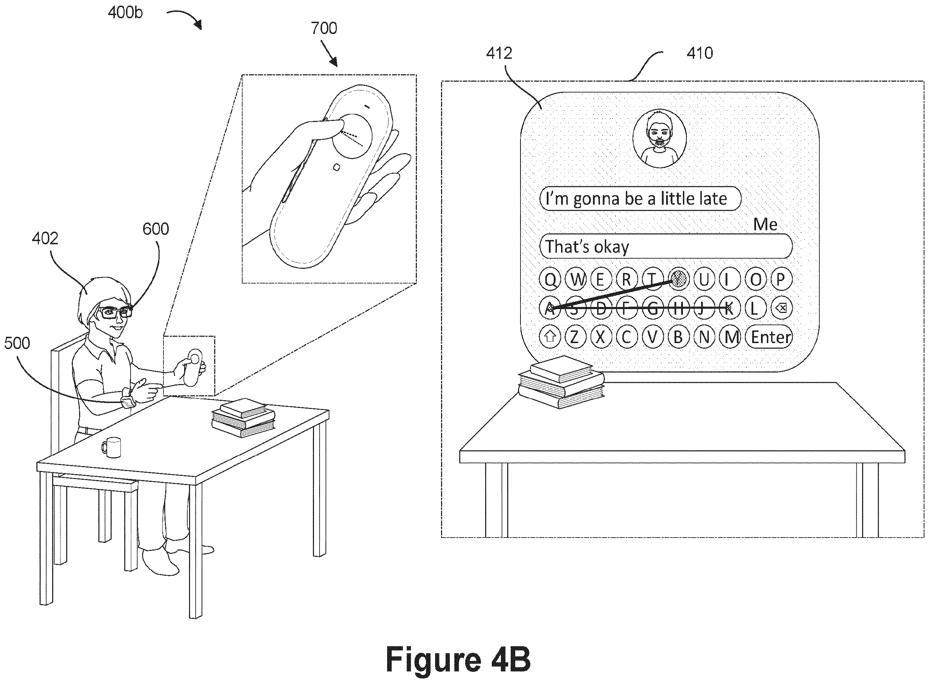

Figures 4A, 4B, 4C-1, and 4C-2 illustrate example extended-reality systems, in accordance with some embodiments. Figure 4A shows a first XR system 400a and first example user interactions using a wrist-wearable device 500, a head-wearable device (e.g., XR device 600), and/or a handheld intermediary processing device (HIPD) 700. Figure 4B shows a second XR system 400b and second example user interactions using a wrist-wearable device 500, XR device 600, and/or an HIPD 700. Figures 4C-1 and 4C-2 show a third XR system 400c and third example user interactions using a wrist-wearable device 500, a head-wearable device (e.g., virtual-reality (VR) device 610), and/or an HIPD 700. As the skilled artisan will appreciate upon reading the descriptions provided herein, the above-example XR systems (described in detail below) can perform various functions and/or operations described above in reference to Figures 1-3B.

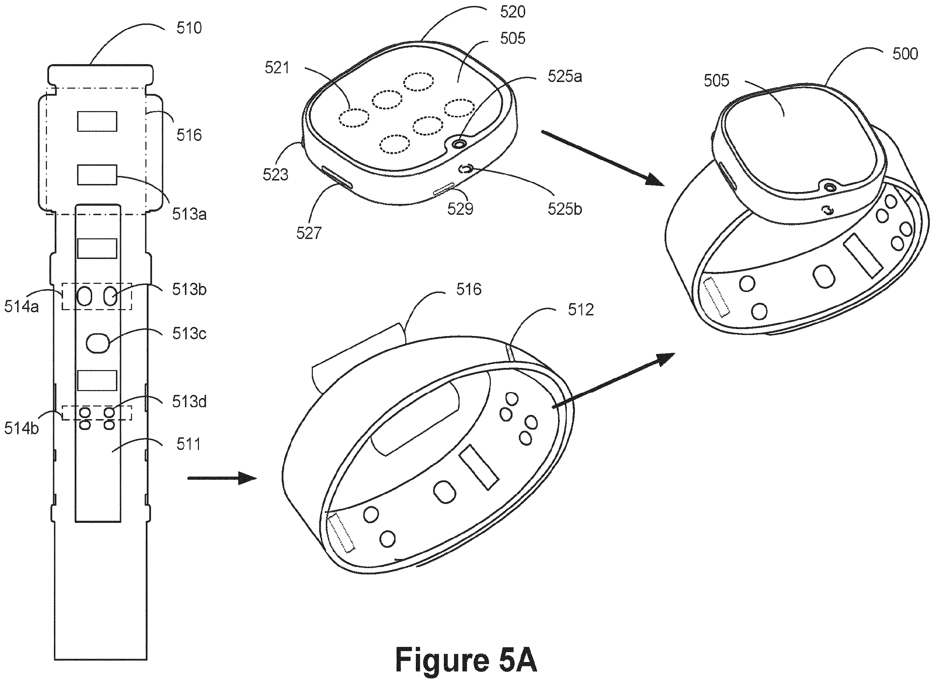

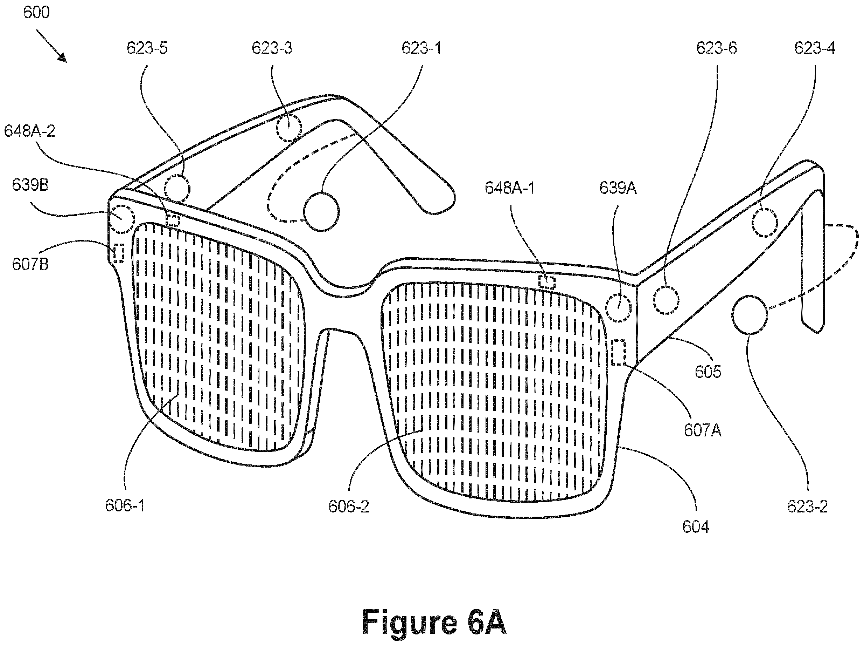

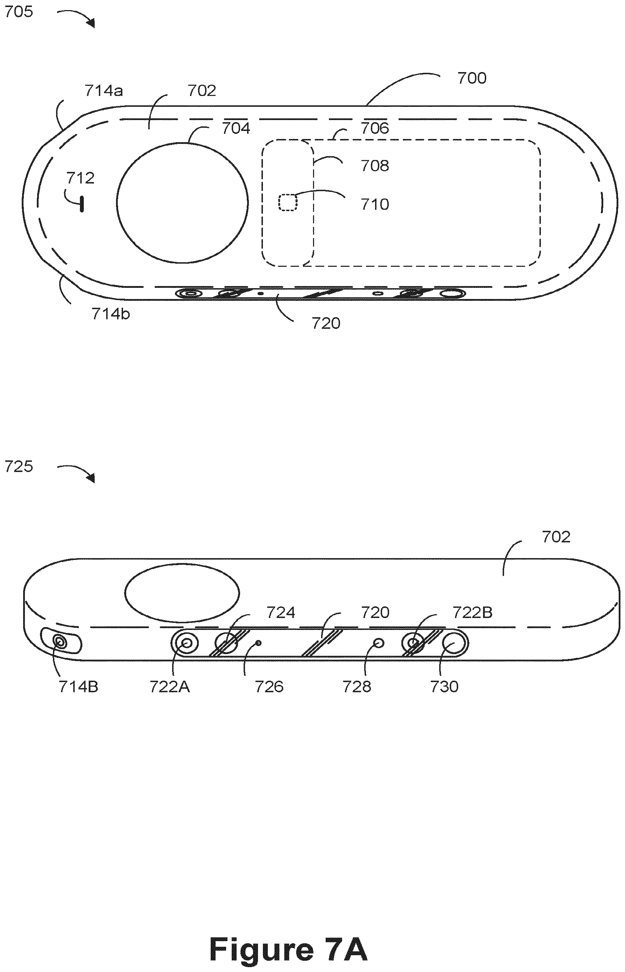

The wrist-wearable device 500 and its constituent components are described below in reference to Figures 5A-5B, the head-wearable devices and their constituent components are described below in reference to Figures 6A-6D, and the HIPD 700 and its constituent components are described below in reference to Figures 7A-7B. The wrist-wearable device 500, the head-wearable devices, and/or the HIPD 700 can communicatively couple via a network 425 (e.g., cellular, near field, Wi-Fi, personal area network, or wireless LAN). Additionally, the wrist-wearable device 500, the head-wearable devices, and/or the HIPD 700 can also communicatively couple with one or more servers 430, computers 440 (e.g., laptops or computers), mobile devices 450 (e.g., smartphones or tablets), and/or other electronic devices via the network 425 (e.g., cellular, near field, Wi-Fi, personal area network, or wireless LAN).

Turning to Figure 4A, a user 402 is shown wearing the wrist-wearable device 500 and the XR device 600, and having the HIPD 700 on their desk. The wrist-wearable device 500, the XR device 600, and the HIPD 700 facilitate user interaction with an XR environment. In particular, as shown by the first XR system 400a, the wrist-wearable device 500, the XR device 600, and/or the HIPD 700 cause presentation of one or more avatars 404, digital representations of contacts 406, and virtual objects 408. As discussed below, the user 402 can interact with the one or more avatars 404, digital representations of the contacts 406, and virtual objects 408 via the wrist-wearable device 500, the XR device 600, and/or the HIPD 700.

The user 402 can use any of the wrist-wearable device 500, the XR device 600, and/or the HIPD 700 to provide user inputs. For example, the user 402 can perform one or more hand gestures that are detected by the wrist-wearable device 500 (e.g., using one or more EMG sensors and/or IMUs, described below in reference to Figures 5A-5B) and/or XR device 600 (e.g., using one or more image sensors or cameras, described below in reference to Figures 6A-6B) to provide a user input. Alternatively, or additionally, the user 402 can provide a user input via one or more touch surfaces of the wrist-wearable device 500, the XR device 600, and/or the HIPD 700, and/or voice commands captured by a microphone of the wrist-wearable device 500, the XR device 600, and/or the HIPD 700. In some embodiments, the wrist-wearable device 500, the XR device 600, and/or the HIPD 700 include a digital assistant to help the user in providing a user input (e.g., completing a sequence of operations, suggesting different operations or commands, providing reminders, or confirming a command). In some embodiments, the user 402 can provide a user input via one or more facial gestures and/or facial expressions. For example, cameras of the wrist-wearable device 500, the XR device 600, and/or the HIPD 700 can track the user 402's eyes for navigating a user interface.

The wrist-wearable device 500, the XR device 600, and/or the HIPD 700 can operate alone or in conjunction to allow the user 402 to interact with the XR environment (e.g., an augmented-reality environment or a mixed-reality environment). In some embodiments, the HIPD 700 is configured to operate as a central hub or control center for the wrist-wearable device 500, the XR device 600, and/or another communicatively coupled device. For example, the user 402 can provide an input to interact with the XR environment at any of the wrist-wearable device 500, the XR device 600, and/or the HIPD 700, and the HIPD 700 can identify one or more back-end and front-end tasks to cause the performance of the requested interaction and distribute instructions to cause the performance of the one or more back-end and front-end tasks at the wrist-wearable device 500, the XR device 600, and/or the HIPD 700. In some embodiments, a back-end task is a background-processing task that is not perceptible by the user (e.g., rendering content, decompression, or compression), and a front-end task is a user-facing task that is perceptible to the user (e.g., presenting information to the user or providing feedback to the user). As described below in reference to Figures 7A-7B, the HIPD 700 can perform the back-end tasks and provide the wrist-wearable device 500 and/or the XR device 600 operational data corresponding to the performed back-end tasks such that the wrist-wearable device 500 and/or the XR device 600 can perform the front-end tasks. In this way, the HIPD 700, which has more computational resources and greater thermal headroom than the wrist-wearable device 500 and/or the XR device 600, performs computationally intensive tasks and reduces the computer resource utilization and/or power usage of the wrist-wearable device 500 and/or the XR device 600.

In the example shown by the first XR system 400a, the HIPD 700 identifies one or more back-end tasks and front-end tasks associated with a user request to initiate an XR video call with one or more other users (represented by the avatar 404 and the digital representation of the contact 406) and distributes instructions to cause the performance of the one or more back-end tasks and front-end tasks. In particular, the HIPD 700 performs back-end tasks for processing and/or rendering image data (and other data) associated with the XR video call and provides operational data associated with the performed back-end tasks to the XR device 600 such that the XR device 600 performs front-end tasks for presenting the XR video call (e.g., presenting the avatar 404 and the digital representation of the contact 406).

In some embodiments, the HIPD 700 can operate as a focal or anchor point for causing the presentation of information. This allows the user 402 to be generally aware of where information is presented. For example, as shown in the first XR system 400a, the avatar 404 and the digital representation of the contact 406 are presented above the HIPD 700. In particular, the HIPD 700 and the XR device 600 operate in conjunction to determine a location for presenting the avatar 404 and the digital representation of the contact 406. In some embodiments, information can be presented within a predetermined distance from the HIPD 700 (e.g., within five meters). For example, as shown in the first XR system 400a, virtual object 408 is presented on the desk some distance from the HIPD 700. Similar to the above example, the HIPD 700 and the XR device 600 can operate in conjunction to determine a location for presenting the virtual object 408. Alternatively, in some embodiments, presentation of information is not bound by the HIPD 700. More specifically, the avatar 404, the digital representation of the contact 406, and the virtual object 408 do not have to be presented within a predetermined distance of the HIPD 700.

User inputs provided at the wrist-wearable device 500, the AR device 600, and/or the HIPD 700 are coordinated such that the user can use any device to initiate, continue, and/or complete an operation. For example, the user 402 can provide a user input to the XR device 600 to cause the XR device 600 to present the virtual object 408 and, while the virtual object 408 is presented by the XR device 600, the user 402 can provide one or more hand gestures via the wrist-wearable device 500 to interact and/or manipulate the virtual object 408.

Figure 4B shows the user 402 wearing the wrist-wearable device 500 and the XR device 600 and holding the HIPD 700. In the second XR system 400b, the wrist-wearable device 500, the XR device 600, and/or the HIPD 700 are used to receive and/or provide one or more messages to a contact of the user 402. In particular, the wrist-wearable device 500, the XR device 600, and/or the HIPD 700 detect and coordinate one or more user inputs to initiate a messaging application and prepare a response to a received message via the messaging application.

In some embodiments, the user 402 initiates, via a user input, an application on the wrist-wearable device 500, the XR device 600, and/or the HIPD 700 that causes the application to initiate on at least one device. For example, in the second XR system 400b, the user 402 performs a hand gesture associated with a command for initiating a messaging application (represented by messaging user interface 412), the wrist-wearable device 500 detects the hand gesture, and, based on a determination that the user 402 is wearing XR device 600, causes the XR device 600 to present a messaging user interface 412 of the messaging application. The XR device 600 can present the messaging user interface 412 to the user 402 via its display (e.g., as shown by user 402's field of view 410). In some embodiments, the application is initiated and can be run on the device (e.g., the wrist-wearable device 500, the XR device 600, and/or the HIPD 700) that detects the user input to initiate the application, and the device provides another device operational data to cause the presentation of the messaging application. For example, the wrist-wearable device 500 can detect the user input to initiate a messaging application, initiate and run the messaging application, and provide operational data to the XR device 600 and/or the HIPD 700 to cause presentation of the messaging application. Alternatively, the application can be initiated and run at a device other than the device that detected the user input. For example, the wrist-wearable device 500 can detect the hand gesture associated with initiating the messaging application and cause the HIPD 700 to run the messaging application and coordinate the presentation of the messaging application.

Further, the user 402 can provide a user input provided at the wrist-wearable device 500, the XR device 600, and/or the HIPD 700 to continue and/or complete an operation initiated at another device. For example, after initiating the messaging application via the wrist-wearable device 500 and while the XR device 600 presents the messaging user interface 412, the user 402 can provide an input at the HIPD 700 to prepare a response (e.g., shown by the swipe gesture performed on the HIPD 700). The user 402's gestures performed on the HIPD 700 can be provided and/or displayed on another device. For example, the user 402's swipe gestures performed on the HIPD 700 are displayed on a virtual keyboard of the messaging user interface 412 displayed by the AR device 600.

In some embodiments, the wrist-wearable device 500, the XR device 600, the HIPD 700, and/or other communicatively coupled devices can present one or more notifications to the user 402. The notification can be an indication of a new message, an incoming call, an application update, a status update, etc. The user 402 can select the notification via the wrist-wearable device 500, the XR device 600, or the HIPD 700 and cause presentation of an application or operation associated with the notification on at least one device. For example, the user 402 can receive a notification that a message was received at the wrist-wearable device 500, the XR device 600, the HIPD 700, and/or other communicatively coupled device and provide a user input at the wrist-wearable device 500, the XR device 600, and/or the HIPD 700 to review the notification, and the device detecting the user input can cause an application associated with the notification to be initiated and/or presented at the wrist-wearable device 500, the XR device 600, and/or the HIPD 700.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the XR device 600 can present to the user 402 game application data and the HIPD 700 can use a controller to provide inputs to the game. Similarly, the user 402 can use the wrist-wearable device 500 to initiate a camera of the XR device 600, and the user can use the wrist-wearable device 500, the XR device 600, and/or the HIPD 700 to manipulate the image capture (e.g., zoom in or out or apply filters) and capture image data.

Turning to Figures 4C-1 and 4C-2, the user 402 is shown wearing the wrist-wearable device 500 and a mixed-reality (MR) device 610 capable of displaying a virtual reality (VR), and holding the HIPD 700. In the third XR system 400c, the wrist-wearable device 500, the MR device 610, and/or the HIPD 700 are used to interact within an MR environment, such as a VR game or other XR application. While the MR device 610 presents a representation of a VR game (e.g., first AR game environment 420) to the user 402, the wrist-wearable device 500, the MR device 610, and/or the HIPD 700 detect and coordinate one or more user inputs to allow the user 402 to interact with the VR game.

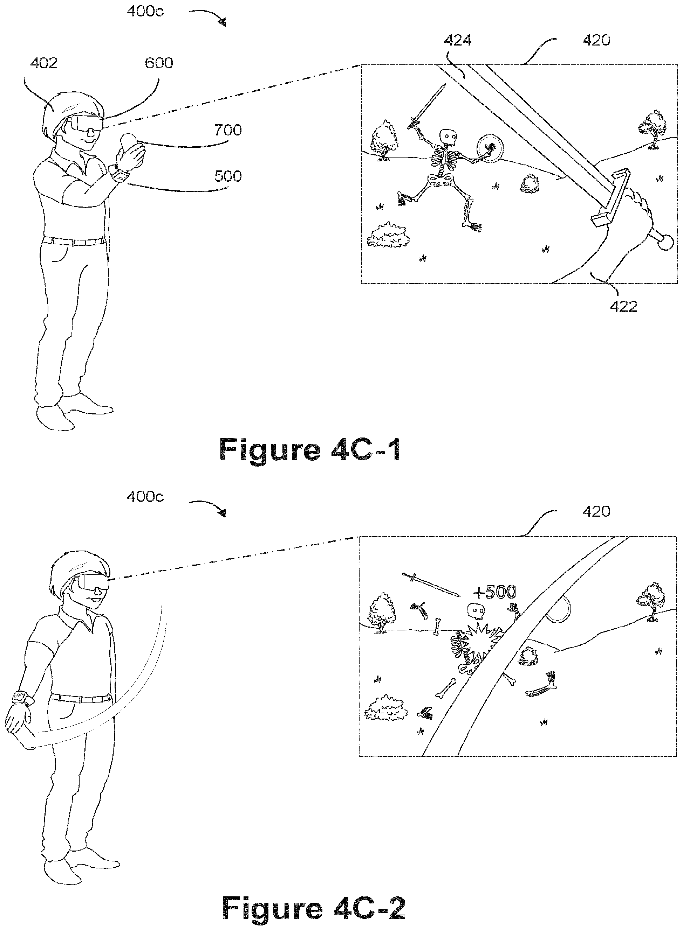

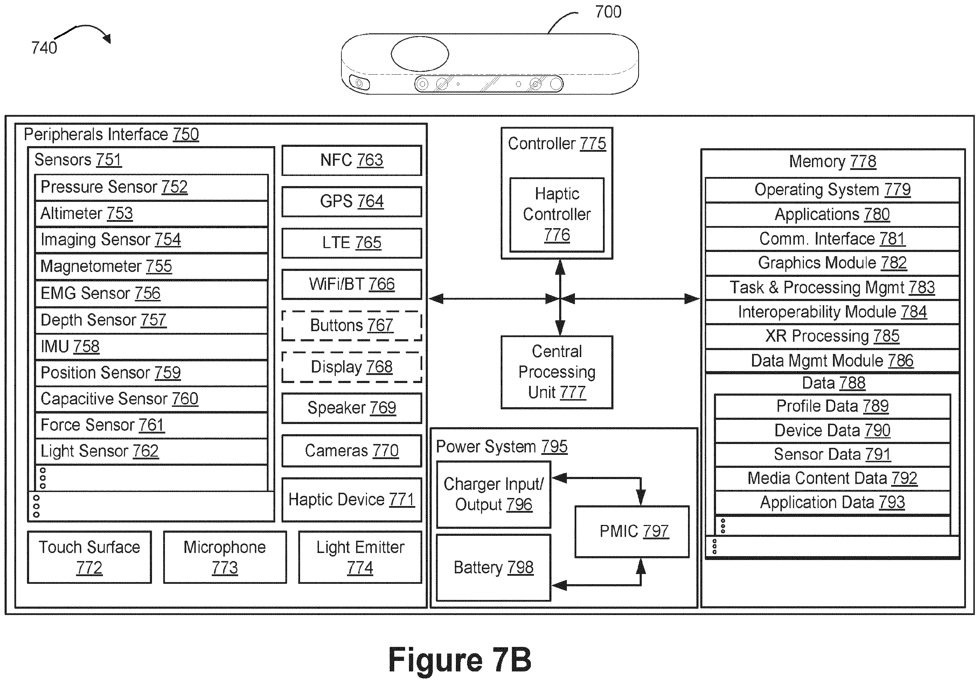

In some embodiments, the user 402 can provide a user input via the wrist-wearable device 500, the MR device 610, and/or the HIPD 700 that causes an action in a corresponding XR environment. For example, the user 402 in the third XR system 400c (shown in Figure 4C-1) raises the HIPD 700 to prepare for a swing in the first XR game environment 420. The MR device 610, responsive to the user 402 raising the HIPD 700, causes the XR representation of the user 422 to perform a similar action (e.g., raise a virtual object, such as a virtual sword 424). In some embodiments, each device uses respective sensor data and/or image data to detect the user input and provide an accurate representation of the user 402's motion. For example, image sensors 758 (e.g., SLAM cameras or other cameras discussed below in Figures 7A and 7B) of the HIPD 700 can be used to detect a position of the 700 relative to the user 402's body such that the virtual object can be positioned appropriately within the first XR game environment 420; sensor data from the wrist-wearable device 500 can be used to detect a velocity at which the user 402 raises the HIPD 700 such that the XR representation of the user 422 and the virtual sword 424 are synchronized with the user 402's movements; and image sensors 626 (Figures 6A-6C) of the MR device 610 can be used to represent the user 402's body, boundary conditions, or real-world objects within the first XR game environment 420.

In Figure 4C-2, the user 402 performs a downward swing while holding the HIPD 700. The user 402's downward swing is detected by the wrist-wearable device 500, the MR device 610, and/or the HIPD 700 and a corresponding action is performed in the first XR game environment 420. In some embodiments, the data captured by each device is used to improve the user's experience within the XR environment. For example, sensor data of the wrist-wearable device 500 can be used to determine a speed and/or force at which the downward swing is performed and image sensors of the HIPD 700 and/or the MR device 610 can be used to determine a location of the swing and how it should be represented in the first XR game environment 420, which, in turn, can be used as inputs for the XR environment (e.g., game mechanics, which can use detected speed, force, locations, and/or aspects of the user 402's actions to classify a user's inputs (e.g., user performs a light strike, hard strike, critical strike, glancing strike, miss) or calculate an output (e.g., amount of damage)).

While the wrist-wearable device 500, the MR device 610, and/or the HIPD 700 are described as detecting user inputs, in some embodiments, user inputs are detected at a single device (with the single device being responsible for distributing signals to the other devices for performing the user input). For example, the HIPD 700 can operate an application for generating the first XR game environment 420 and provide the MR device 610 with corresponding data for causing the presentation of the first XR game environment 420, as well as detect the 402's movements (while holding the HIPD 700) to cause the performance of corresponding actions within the first XR game environment 420. Additionally or alternatively, in some embodiments, operational data (e.g., sensor data, image data, application data, device data, and/or other data) of one or more devices is provide to a single device (e.g., the HIPD 700) to process the operational data and cause respective devices to perform an action associated with processed operational data.

Having discussed example XR systems, devices for interacting with such XR systems, and other computing systems more generally, devices and components will now be discussed in greater detail below. Some definitions of devices and components that can be included in some or all of the example devices discussed below are defined here for ease of reference. A skilled artisan will appreciate that certain types of the components described below may be more suitable for a particular set of devices and less suitable for a different set of devices. But subsequent references to the components defined here should be considered to be encompassed by the definitions provided.

In some embodiments discussed below, example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices and/or a subset of components of one or more electronic devices, which facilitates communication, and/or data processing, and/or data transfer between the respective electronic devices and/or electronic components.

### Example Wrist-Wearable Devices

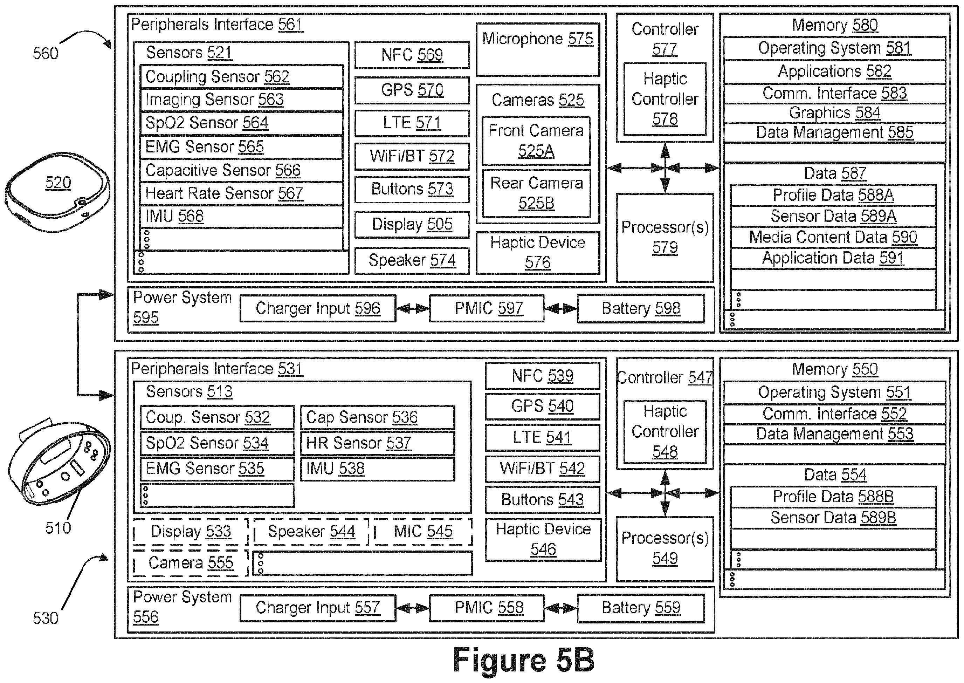

Figures 5A and 5B illustrate an example wrist-wearable device 500, in accordance with some embodiments. Figure 5A illustrates components of the wrist-wearable device 500, which can be used individually or in combination, including combinations that include other electronic devices and/or electronic components.

Figure 5A shows a wearable band 510 and a watch body 520 (or capsule) being coupled, as discussed below, to form the wrist-wearable device 500. The wrist-wearable device 500 can perform various functions and/or operations associated with navigating through user interfaces and selectively opening applications, as well as the functions and/or operations described above in reference to Figures 4A-4C-2.

As will be described in greater detail below, operations executed by the wrist-wearable device 500 can include (i) presenting content to a user (e.g., displaying visual content via a display 505); (ii) detecting (e.g., sensing) user input (e.g., sensing a touch on peripheral button 523 and/or at a touch screen of the display 505, a hand gesture detected by sensors (e.g., biopotential sensors)); (iii) sensing biometric data via one or more sensors 513 (e.g., neuromuscular signals, heart rate, temperature, or sleep); messaging (e.g., text, speech, or video); image capture via one or more imaging devices or cameras 525; wireless communications (e.g., cellular, near field, Wi-Fi, or personal area network); location determination; financial transactions; providing haptic feedback; alarms; notifications; biometric authentication; health monitoring; and/or sleep monitoring.

The above-example functions can be executed independently in the watch body 520, independently in the wearable band 510, and/or via an electronic communication between the watch body 520 and the wearable band 510. In some embodiments, functions can be executed on the wrist-wearable device 500 while an XR environment is being presented (e.g., via one of the XR systems 400a to 400c). As the skilled artisan will appreciate upon reading the descriptions provided herein, the novel wearable devices described herein can be used with other types of XR environments.

The wearable band 510 can be configured to be worn by a user such that an inner (or inside) surface of the wearable structure 511 of the wearable band 510 is in contact with the user's skin. When worn by a user, sensors 513 contact the user's skin. The sensors 513 can sense biometric data such as a user's heart rate, saturated oxygen level, temperature, sweat level, neuromuscular-signal sensors, or a combination thereof. The sensors 513 can also sense data about a user's environment, including a user's motion, altitude, location, orientation, gait, acceleration, position, or a combination thereof. In some embodiments, the sensors 513 are configured to track a position and/or motion of the wearable band 510. The one or more sensors 513 can include any of the sensors defined above and/or discussed below with respect to Figure 5B.

The one or more sensors 513 can be distributed on an inside and/or an outside surface of the wearable band 510. In some embodiments, the one or more sensors 513 are uniformly spaced along the wearable band 510. Alternatively, in some embodiments, the one or more sensors 513 are positioned at distinct points along the wearable band 510. As shown in Figure 5A, the one or more sensors 513 can be the same or distinct. For example, in some embodiments, the one or more sensors 513 can be shaped as a pill (e.g., sensor 513a), an oval, a circle a square, an oblong (e.g., sensor 513c), and/or any other shape that maintains contact with the user's skin (e.g., such that neuromuscular signal and/or other biometric data can be accurately measured at the user's skin). In some embodiments, the one or more sensors 513 are aligned to form pairs of sensors (e.g., for sensing neuromuscular signals based on differential sensing within each respective sensor). For example, sensor 513b is aligned with an adjacent sensor to form sensor pair 514a, and sensor 513d is aligned with an adjacent sensor to form sensor pair 514b. In some embodiments, the wearable band 510 does not have a sensor pair. Alternatively, in some embodiments, the wearable band 510 has a predetermined number of sensor pairs (one pair of sensors, three pairs of sensors, four pairs of sensors, six pairs of sensors, or sixteen pairs of sensors).

The wearable band 510 can include any suitable number of sensors 513. In some embodiments, the amount and arrangements of sensors 513 depend on the particular application for which the wearable band 510 is used. For instance, a wearable band 510 configured as an armband, wristband, or chest-band may include a plurality of sensors 513 with a different number of sensors 513 and different arrangement for each use case, such as medical use cases, compared to gaming or general day-to-day use cases.

In accordance with some embodiments, the wearable band 510 further includes an electrical ground electrode and a shielding electrode. The electrical ground and shielding electrodes, like the sensors 513, can be distributed on the inside surface of the wearable band 510 such that they contact a portion of the user's skin. For example, the electrical ground and shielding electrodes can be at an inside surface of coupling mechanism 516 or an inside surface of a wearable structure 511. The electrical ground and shielding electrodes can be formed and/or use the same components as the sensors 513. In some embodiments, the wearable band 510 includes more than one electrical ground electrode and more than one shielding electrode.

The sensors 513 can be formed as part of the wearable structure 511 of the wearable band 510. In some embodiments, the sensors 513 are flush or substantially flush with the wearable structure 511 such that they do not extend beyond the surface of the wearable structure 511. While flush with the wearable structure 511, the sensors 513 are still configured to contact the user's skin (e.g., via a skin-contacting surface). Alternatively, in some embodiments, the sensors 513 extend beyond the wearable structure 511 a predetermined distance (e.g., 0.1 mm to 2 mm) to make contact and depress into the user's skin. In some embodiments, the sensors 513 are coupled to an actuator (not shown) configured to adjust an extension height (e.g., a distance from the surface of the wearable structure 511) of the sensors 513 such that the sensors 513 make contact and depress into the user's skin. In some embodiments, the actuators adjust the extension height between 0.01 mm to 1.2 mm. This allows the user to customize the positioning of the sensors 513 to improve the overall comfort of the wearable band 510 when worn while still allowing the sensors 513 to contact the user's skin. In some embodiments, the sensors 513 are indistinguishable from the wearable structure 511 when worn by the user.

The wearable structure 511 can be formed of an elastic material, elastomers, etc., configured to be stretched and fitted to be worn by the user. In some embodiments, the wearable structure 511 is a textile or woven fabric. As described above, the sensors 513 can be formed as part of a wearable structure 511. For example, the sensors 513 can be molded into the wearable structure 511 or be integrated into a woven fabric (e.g., the sensors 513 can be sewn into the fabric and mimic the pliability of fabric (e.g., the sensors 513 can be constructed from a series of woven strands of fabric)).

The wearable structure 511 can include flexible electronic connectors that interconnect the sensors 513, the electronic circuitry, and/or other electronic components (described below in reference to Figure 5B) that are enclosed in the wearable band 510. In some embodiments, the flexible electronic connectors are configured to interconnect the sensors 513, the electronic circuitry, and/or other electronic components of the wearable band 510 with respective sensors and/or other electronic components of another electronic device (e.g., watch body 520). The flexible electronic connectors are configured to move with the wearable structure 511 such that the user adjustment to the wearable structure 511 (e.g., resizing, pulling, or folding) does not stress or strain the electrical coupling of components of the wearable band 510.

As described above, the wearable band 510 is configured to be worn by a user. In particular, the wearable band 510 can be shaped or otherwise manipulated to be worn by a user. For example, the wearable band 510 can be shaped to have a substantially circular shape such that it can be configured to be worn on the user's lower arm or wrist. Alternatively, the wearable band 510 can be shaped to be worn on another body part of the user, such as the user's upper arm (e.g., around a bicep), forearm, chest, legs, etc. The wearable band 510 can include a retaining mechanism 512 (e.g., a buckle or a hook and loop fastener) for securing the wearable band 510 to the user's wrist or other body part. While the wearable band 510 is worn by the user, the sensors 513 sense data (referred to as sensor data) from the user's skin. In particular, the sensors 513 of the wearable band 510 obtain (e.g., sense and record) neuromuscular signals.

The sensed data (e.g., sensed neuromuscular signals) can be used to detect and/or determine the user's intention to perform certain motor actions. In particular, the sensors 513 sense and record neuromuscular signals from the user as the user performs muscular activations (e.g., movements or gestures). The detected and/or determined motor action (e.g., phalange (or digits) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on the display 505 of the wrist-wearable device 500 and/or can be transmitted to a device responsible for rendering an XR environment (e.g., a head-mounted display) to perform an action in an associated XR environment, such as to control the motion of a virtual device displayed to the user. The muscular activations performed by the user can include static gestures, such as placing the user's hand palm down on a table; dynamic gestures, such as grasping a physical or virtual object; and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by the sensors 513 can be used to provide a user with an enhanced interaction with a physical object (e.g., devices communicatively coupled with the wearable band 510) and/or a virtual object in an XR application generated by an XR system (e.g., user interface objects presented on the display 505 or another computing device (e.g., a smartphone)).

In some embodiments, the wearable band 510 includes one or more haptic devices 546 (Figure 5B; e.g., a vibratory haptic actuator) that are configured to provide haptic feedback (e.g., a cutaneous and/or kinesthetic sensation) to the user's skin. The sensors 513 and/or the haptic devices 546 can be configured to operate in conjunction with multiple applications including, without limitation, health monitoring, social media, games, and XR (e.g., the applications associated with XR).

The wearable band 510 can also include a coupling mechanism 516 (e.g., a cradle or a shape of the coupling mechanism can correspond to the shape of the watch body 520 of the wrist-wearable device 500) for detachably coupling a capsule (e.g., a computing unit) or watch body 520 (via a coupling surface of the watch body 520) to the wearable band 510. In particular, the coupling mechanism 516 can be configured to receive a coupling surface proximate to the bottom side of the watch body 520 (e.g., a side opposite to a front side of the watch body 520 where the display 505 is located), such that a user can push the watch body 520 downward into the coupling mechanism 516 to attach the watch body 520 to the coupling mechanism 516. In some embodiments, the coupling mechanism 516 can be configured to receive a top side of the watch body 520 (e.g., a side proximate to the front side of the watch body 520 where the display 505 is located) that is pushed upward into the cradle, as opposed to being pushed downward into the coupling mechanism 516. In some embodiments, the coupling mechanism 516 is an integrated component of the wearable band 510 such that the wearable band 510 and the coupling mechanism 516 are a single unitary structure. In some embodiments, the coupling mechanism 516 is a type of frame or shell that allows the watch body 520 coupling surface to be retained within or on the wearable band 510 coupling mechanism 516 (e.g., a cradle, a tracker band, a support base, or a clasp).

The coupling mechanism 516 can allow for the watch body 520 to be detachably coupled to the wearable band 510 through a friction fit, a magnetic coupling, a rotation-based connector, a shear-pin coupler, a retention spring, one or more magnets, a clip, a pin shaft, a hook-and-loop fastener, or a combination thereof. A user can perform any type of motion to couple the watch body 520 to the wearable band 510 and to decouple the watch body 520 from the wearable band 510. For example, a user can twist, slide, turn, push, pull, or rotate the watch body 520 relative to the wearable band 510, or a combination thereof, to attach the watch body 520 to the wearable band 510 and to detach the watch body 520 from the wearable band 510. Alternatively, as discussed below, in some embodiments, the watch body 520 can be decoupled from the wearable band 510 by actuation of the release mechanism 529.

The wearable band 510 can be coupled with a watch body 520 to increase the functionality of the wearable band 510 (e.g., converting the wearable band 510 into a wrist-wearable device 500, adding an additional computing unit and/or battery to increase computational resources and/or a battery life of the wearable band 510, or adding additional sensors to improve sensed data). As described above, the wearable band 510 (and the coupling mechanism 516) is configured to operate independently (e.g., execute functions independently) from watch body 520. For example, the coupling mechanism 516 can include one or more sensors 513 that contact a user's skin when the wearable band 510 is worn by the user and provide sensor data for determining control commands.

A user can detach the watch body 520 (or capsule) from the wearable band 510 in order to reduce the encumbrance of the wrist-wearable device 500 to the user. For embodiments in which the watch body 520 is removable, the watch body 520 can be referred to as a removable structure, such that in these embodiments the wrist-wearable device 500 includes a wearable portion (e.g., the wearable band 510) and a removable structure (the watch body 520).

Turning to the watch body 520, the watch body 520 can have a substantially rectangular or circular shape. The watch body 520 is configured to be worn by the user on their wrist or on another body part. More specifically, the watch body 520 is sized to be easily carried by the user, attached on a portion of the user's clothing, and/or coupled to the wearable band 510 (forming the wrist-wearable device 500). As described above, the watch body 520 can have a shape corresponding to the coupling mechanism 516 of the wearable band 510. In some embodiments, the watch body 520 includes a single release mechanism 529 or multiple release mechanisms (e.g., two release mechanisms 529 positioned on opposing sides of the watch body 520, such as spring-loaded buttons) for decoupling the watch body 520 and the wearable band 510. The release mechanism 529 can include, without limitation, a button, a knob, a plunger, a handle, a lever, a fastener, a clasp, a dial, a latch, or a combination thereof.

A user can actuate the release mechanism 529 by pushing, turning, lifting, depressing, shifting, or performing other actions on the release mechanism 529. Actuation of the release mechanism 529 can release (e.g., decouple) the watch body 520 from the coupling mechanism 516 of the wearable band 510, allowing the user to use the watch body 520 independently from wearable band 510 and vice versa. For example, decoupling the watch body 520 from the wearable band 510 can allow the user to capture images using rear-facing camera 525b. Although the coupling mechanism 516 is shown positioned at a corner of watch body 520, the release mechanism 529 can be positioned anywhere on watch body 520 that is convenient for the user to actuate. In addition, in some embodiments, the wearable band 510 can also include a respective release mechanism for decoupling the watch body 520 from the coupling mechanism 516. In some embodiments, the release mechanism 529 is optional and the watch body 520 can be decoupled from the coupling mechanism 516, as described above (e.g., via twisting or rotating).

The watch body 520 can include one or more peripheral buttons 523 and 527 for performing various operations at the watch body 520. For example, the peripheral buttons 523 and 527 can be used to turn on or wake (e.g., transition from a sleep state to an active state) the display 505, unlock the watch body 520, increase or decrease volume, increase or decrease brightness, interact with one or more applications, interact with one or more user interfaces. Additionally, or alternatively, in some embodiments, the display 505 operates as a touch screen and allows the user to provide one or more inputs for interacting with the watch body 520.

In some embodiments, the watch body 520 includes one or more sensors 521. The sensors 521 of the watch body 520 can be the same or distinct from the sensors 513 of the wearable band 510. The sensors 521 of the watch body 520 can be distributed on an inside and/or an outside surface of the watch body 520. In some embodiments, the sensors 521 are configured to contact a user's skin when the watch body 520 is worn by the user. For example, the sensors 521 can be placed on the bottom side of the watch body 520 and the coupling mechanism 516 can be a cradle with an opening that allows the bottom side of the watch body 520 to directly contact the user's skin. Alternatively, in some embodiments, the watch body 520 does not include sensors that are configured to contact the user's skin (e.g., including sensors internal and/or external to the watch body 520 that are configured to sense data of the watch body 520 and the watch body 520's surrounding environment). In some embodiments, the sensors 513 are configured to track a position and/or motion of the watch body 520.

The watch body 520 and the wearable band 510 can share data using a wired communication method (e.g., a Universal Asynchronous Receiver/Transmitter (UART) or a USB transceiver) and/or a wireless communication method (e.g., near-field communication or Bluetooth). For example, the watch body 520 and the wearable band 510 can share data sensed by the sensors 513 and 521, as well as application- and device-specific information (e.g., active and/or available applications), output devices (e.g., display or speakers), and/or input devices (e.g., touch screens, microphones, or imaging sensors).

In some embodiments, the watch body 520 can include, without limitation, a front-facing camera 525a and/or a rear-facing camera 525b, sensors 521 (e.g., a biometric sensor, an IMU sensor, a heart rate sensor, a saturated oxygen sensor, a neuromuscular-signal sensor, an altimeter sensor, a temperature sensor, a bioimpedance sensor, a pedometer sensor, an optical sensor (e.g., Figure 5B; imaging sensor 563), a touch sensor, a sweat sensor). In some embodiments, the watch body 520 can include one or more haptic devices 576 (Figure 5B; a vibratory haptic actuator) that is configured to provide haptic feedback (e.g., a cutaneous and/or kinesthetic sensation) to the user. The sensors 521 and/or the haptic device 576 can also be configured to operate in conjunction with multiple applications, including, without limitation, health-monitoring applications, social media applications, game applications, and XR applications (e.g., the applications associated with XR).

As described above, the watch body 520 and the wearable band 510, when coupled, can form the wrist-wearable device 500. When coupled, the watch body 520 and wearable band 510 operate as a single device to execute functions (e.g., operations, detections, or communications) described herein. In some embodiments, each device is provided with particular instructions for performing the one or more operations of the wrist-wearable device 500. For example, in accordance with a determination that the watch body 520 does not include neuromuscular-signal sensors, the wearable band 510 can include alternative instructions for performing associated instructions (e.g., providing sensed neuromuscular-signal data to the watch body 520 via a different electronic device). Operations of the wrist-wearable device 500 can be performed by the watch body 520 alone or in conjunction with the wearable band 510 (e.g., via respective processors and/or hardware components) and vice versa. In some embodiments, operations of the wrist-wearable device 500, the watch body 520, and/or the wearable band 510 can be performed in conjunction with one or more processors and/or hardware components of another communicatively coupled device (e.g., Figures 7A-7B; the HIPD 700).

As described below in reference to the block diagram of Figure 5B, the wearable band 510 and/or the watch body 520 can each include independent resources required to independently execute functions. For example, the wearable band 510 and/or the watch body 520 can each include a power source (e.g., a battery), a memory, data storage, a processor (e.g., a CPU), communications, a light source, and/or input/output devices.

Figure 5B shows block diagrams of a computing system 530 corresponding to the wearable band 510 and a computing system 560 corresponding to the watch body 520, according to some embodiments. A computing system of the wrist-wearable device 500 includes a combination of components of the wearable band computing system 530 and the watch body computing system 560, in accordance with some embodiments.

The watch body 520 and/or the wearable band 510 can include one or more components shown in watch body computing system 560. In some embodiments, a single integrated circuit includes all or a substantial portion of the components of the watch body computing system 560 that are included in a single integrated circuit. Alternatively, in some embodiments, components of the watch body computing system 560 are included in a plurality of integrated circuits that are communicatively coupled. In some embodiments, the watch body computing system 560 is configured to couple (e.g., via a wired or wireless connection) with the wearable band computing system 530, which allows the computing systems to share components, distribute tasks, and/or perform other operations described herein (individually or as a single device).

The watch body computing system 560 can include one or more processors 579, a controller 577, a peripherals interface 561, a power system 595, and memory (e.g., a memory 580), each of which is defined above and described in greater detail below.

The power system 595 can include a charger input 596, a power-management integrated circuit (PMIC) 597, and a battery 598, each of which is defined above. In some embodiments, a watch body 520 and a wearable band 510 can have respective charger inputs (e.g., charger inputs 596 and 557), respective batteries (e.g., batteries 598 and 559), and can share power with each other (e.g., the watch body 520 can power and/or charge the wearable band 510 and vice versa). Although watch body 520 and/or the wearable band 510 can include respective charger inputs, a single charger input can charge both devices when coupled. The watch body 520 and the wearable band 510 can receive a charge using a variety of techniques. In some embodiments, the watch body 520 and the wearable band 510 can use a wired charging assembly (e.g., a power cord) to receive the charge. Alternatively, or in addition, the watch body 520 and/or the wearable band 510 can be configured for wireless charging. For example, a portable charging device can be designed to mate with a portion of watch body 520 and/or wearable band 510 and wirelessly deliver usable power to a battery of watch body 520 and/or wearable band 510. The watch body 520 and the wearable band 510 can have independent power systems (e.g., power systems 595 and 556) to enable each to operate independently. The watch body 520 and wearable band 510 can also share power (e.g., one can charge the other) via respective PMICs (e.g., PMICs 597 and 558) that can share power over power and ground conductors and/or over wireless charging antennas.

In some embodiments, the peripherals interface 561 can include one or more sensors 521, many of which listed below are defined above. The sensors 521 can include one or more coupling sensors 562 for detecting when the watch body 520 is coupled with another electronic device (e.g., a wearable band 510). The sensors 521 can include imaging sensors 563 (one or more of the cameras 525 and/or separate imaging sensors 563 (e.g., thermal-imaging sensors)). In some embodiments, the sensors 521 include one or more SpO₂ sensors 564. In some embodiments, the sensors 521 include one or more biopotential-signal sensors (e.g., EMG sensors 565, which may be disposed on a user-facing portion of the watch body 520 and/or the wearable band 510). In some embodiments, the sensors 521 include one or more capacitive sensors 566. In some embodiments, the sensors 521 include one or more heart rate sensors 567. In some embodiments, the sensors 521 include one or more IMUs 568. In some embodiments, one or more IMUs 568 can be configured to detect movement of a user's hand or other location where the watch body 520 is placed or held.

In some embodiments, the peripherals interface 561 includes an NFC component 569, a GPS component 570, a long-term evolution (LTE) component 571, and/or a Wi-Fi and/or Bluetooth communication component 572. In some embodiments, the peripherals interface 561 includes one or more buttons 573 (e.g., the peripheral buttons 523 and 527 in Figure 5A), which, when selected by a user, cause operations to be performed at the watch body 520. In some embodiments, the peripherals interface 561 includes one or more indicators, such as a light-emitting diode (LED), to provide a user with visual indicators (e.g., message received, low battery, an active microphone, and/or a camera).

The watch body 520 can include at least one display 505 for displaying visual representations of information or data to the user, including user-interface elements and/or three-dimensional (3D) virtual objects. The display can also include a touch screen for inputting user inputs, such as touch gestures, swipe gestures, and the like. The watch body 520 can include at least one speaker 574 and at least one microphone 575 for providing audio signals to the user and receiving audio input from the user. The user can provide user inputs through the microphone 575 and can also receive audio output from the speaker 574 as part of a haptic event provided by the haptic controller 578. The watch body 520 can include at least one camera 525, including a front-facing camera 525a and a rear-facing camera 525b. The cameras 525 can include ultra-wide-angle cameras, wide-angle cameras, fish-eye cameras, spherical cameras, telephoto cameras, depth-sensing cameras, or other types of cameras.

The watch body computing system 560 can include one or more haptic controllers 578 and associated componentry (e.g., haptic devices 576) for providing haptic events at the watch body 520 (e.g., a vibrating sensation or audio output in response to an event at the watch body 520). The haptic controllers 578 can communicate with one or more haptic devices 576, such as electroacoustic devices, including a speaker of the one or more speakers 574 and/or other audio components and/or electromechanical devices that convert energy into linear motion such as a motor, solenoid, electroactive polymer, piezoelectric actuator, electrostatic actuator, or other tactile output-generating component (e.g., a component that converts electrical signals into tactile outputs on the device). The haptic controller 578 can provide haptic events to respective haptic actuators that are capable of being sensed by a user of the watch body 520. In some embodiments, the one or more haptic controllers 578 can receive input signals from an application of the applications 582.

In some embodiments, the computer system 530 and/or the computer system 560 can include memory 580, which can be controlled by a memory controller of the one or more controllers 577 and/or one or more processors 579. In some embodiments, software components stored in the memory 580 include one or more applications 582 configured to perform operations at the watch body 520. In some embodiments, the one or more applications 582 include games, word processors, messaging applications, calling applications, web browsers, social media applications, media streaming applications, financial applications, calendars, clocks, etc. In some embodiments, software components stored in the memory 580 include one or more communication interface modules 583 as defined above. In some embodiments, software components stored in the memory 580 include one or more graphics modules 584 for rendering, encoding, and/or decoding audio and/or visual data; and one or more data-management modules 585 for collecting, organizing, and/or providing access to the data 587 stored in memory 580. In some embodiments, one or more of applications 582 and/or one or more modules can work in conjunction with one another to perform various tasks at the watch body 520.

In some embodiments, software components stored in the memory 580 can include one or more operating systems 581 (e.g., a Linux-based operating system, an Android operating system, etc.). The memory 580 can also include data 587. The data 587 can include profile data 588A, sensor data 589A, media content data 590, and application data 591.

It should be appreciated that the watch body computing system 560 is an example of a computing system within the watch body 520, and that the watch body 520 can have more or fewer components than shown in the watch body computing system 560, combine two or more components, and/or have a different configuration and/or arrangement of the components. The various components shown in watch body computing system 560 are implemented in hardware, software, firmware, or a combination thereof, including one or more signal-processing and/or application-specific integrated circuits.

Turning to the wearable band computing system 530, one or more components that can be included in the wearable band 510 are shown. The wearable band computing system 530 can include more or fewer components than shown in the watch body computing system 560, combine two or more components, and/or have a different configuration and/or arrangement of some or all of the components. In some embodiments, all or a substantial portion of the components of the wearable band computing system 530 are included in a single integrated circuit. Alternatively, in some embodiments, components of the wearable band computing system 530 are included in a plurality of integrated circuits that are communicatively coupled. As described above, in some embodiments, the wearable band computing system 530 is configured to couple (e.g., via a wired or wireless connection) with the watch body computing system 560, which allows the computing systems to share components, distribute tasks, and/or perform other operations described herein (individually or as a single device).

The wearable band computing system 530, similar to the watch body computing system 560, can include one or more processors 549, one or more controllers 547 (including one or more haptics controller 548), a peripherals interface 531 that can include one or more sensors 513 and other peripheral devices, a power source (e.g., a power system 556), and memory (e.g., a memory 550) that includes an operating system (e.g., an operating system 551), data (e.g., data 554 including profile data 588B, sensor data 589B, etc.), and one or more modules (e.g., a communications interface module 552, a data management module 553, etc.).

The one or more sensors 513 can be analogous to sensors 521 of the computer system 560 in light of the definitions above. For example, sensors 513 can include one or more coupling sensors 532, one or more SpO₂ sensors 534, one or more EMG sensors 535, one or more capacitive sensors 536, one or more heart rate sensors 537, and one or more IMU sensors 538.

The peripherals interface 531 can also include other components analogous to those included in the peripheral interface 561 of the computer system 560, including an NFC component 539, a GPS component 540, an LTE component 541, a Wi-Fi and/or Bluetooth communication component 542, and/or one or more haptic devices 576 as described above in reference to peripherals interface 561. In some embodiments, the peripherals interface 531 includes one or more buttons 543, a display 533, a speaker 544, a microphone 545, and a camera 555. In some embodiments, the peripherals interface 531 includes one or more indicators, such as an LED.

It should be appreciated that the wearable band computing system 530 is an example of a computing system within the wearable band 510, and that the wearable band 510 can have more or fewer components than shown in the wearable band computing system 530, combine two or more components, and/or have a different configuration and/or arrangement of the components. The various components shown in wearable band computing system 530 can be implemented in one or a combination of hardware, software, and firmware, including one or more signal-processing and/or application-specific integrated circuits.

The wrist-wearable device 500 with respect to Figures 5A is an example of the wearable band 510 and the watch body 520 coupled, so the wrist-wearable device 500 will be understood to include the components shown and described for the wearable band computing system 530 and the watch body computing system 560. In some embodiments, wrist-wearable device 500 has a split architecture (e.g., a split mechanical architecture or a split electrical architecture) between the watch body 520 and the wearable band 510. In other words, all of the components shown in the wearable band computing system 530 and the watch body computing system 560 can be housed or otherwise disposed in a combined watch device 500, or within individual components of the watch body 520, wearable band 510, and/or portions thereof (e.g., a coupling mechanism 516 of the wearable band 510).

The techniques described above can be used with any device, including the arm-wearable devices of Figure 5A-5B, for sensing neuromuscular signals, but could also be used with other types of wearable devices for sensing neuromuscular signals (such as body-wearable or head-wearable devices that might have neuromuscular sensors closer to the brain or spinal column).

In some embodiments, a wrist-wearable device 500 can be used in conjunction with a head-wearable device described below (e.g., XR device 600 and MR device 610) and/or an HIPD 700, and the wrist-wearable device 500 can also be configured to be used to allow a user to control aspects of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable device, attention will now be turned to example head-wearable devices, such AR device 600 and VR device 610.

### Example Head-Wearable Devices

Figures 6A, 6B-1, 6B-2, and 6C show example head-wearable devices, in accordance with some embodiments. Head-wearable devices can include, but are not limited to, XR devices 600 (e.g., XR or smart eyewear devices, such as smart glasses, smart monocles, smart contacts, etc.), MR devices 610 (e.g., VR headsets or head-mounted displays (HMDs)), or other ocularly coupled devices. The XR devices 600 and the MR devices 610 are instances of the head-wearable device 110 described in reference to Figures 1-3B herein, such that the head-wearable device should be understood to have the features of the XR devices 600 and/or the MR devices 610 and vice versa. The XR devices 600 and the MR device 610 can perform various functions and/or operations associated with navigating through user interfaces and selectively opening applications, as well as the functions and/or operations described above in reference to Figures 1-3B.

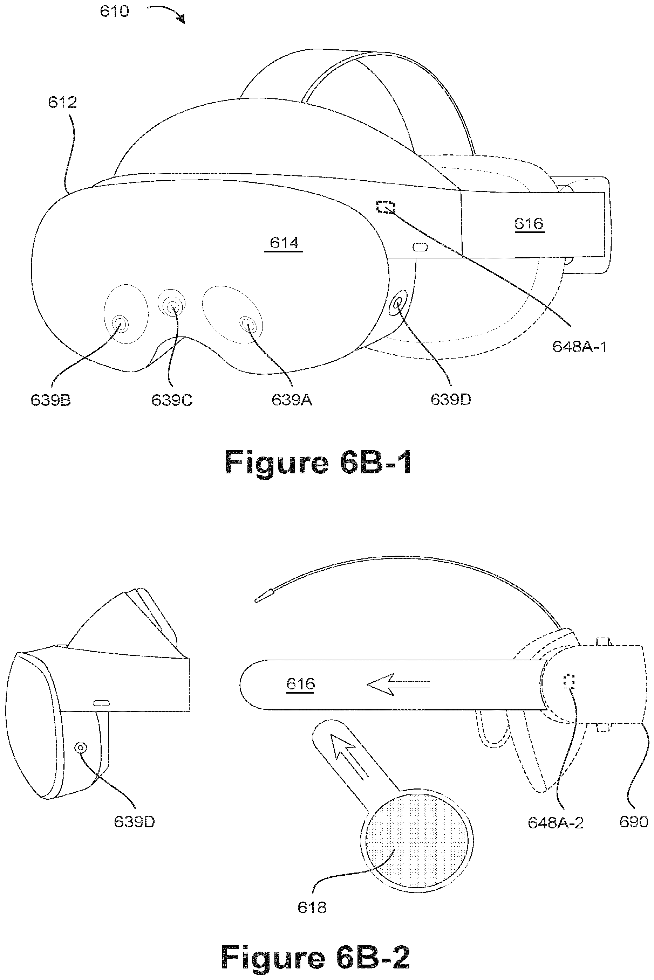

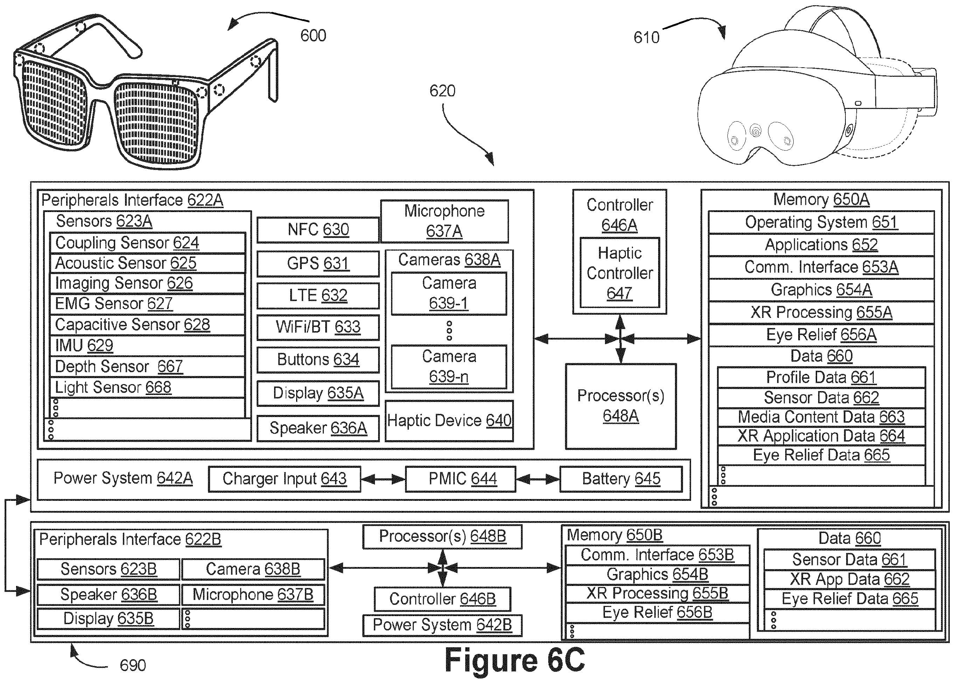

In some embodiments, an XR system (e.g., Figures 4A-4C-2; AR systems 400a-400c) includes an AR device 600 (as shown in Figure 6A) and/or MR device 610 (as shown in Figures 6B-1-B-2). In some embodiments, the XR device 600 and the MR device 610 can include one or more analogous components (e.g., components for presenting interactive AR environments, such as processors, memory, and/or presentation devices, including one or more displays and/or one or more waveguides), some of which are described in greater detail with respect to Figure 6C. The head-wearable devices can use display projectors (e.g., display projector assemblies 607A and 607B) and/or waveguides for projecting representations of data to a user. Some embodiments of head-wearable devices do not include displays.

Figure 6A shows an example visual depiction of the XR device 600 (e.g., which may also be described herein as augmented-reality glasses and/or smart glasses). The XR device 600 can work in conjunction with additional electronic components that are not shown in Figure 6A, such as a wearable accessory device and/or an intermediary processing device, in electronic communication or otherwise configured to be used in conjunction with the XR device 600. In some embodiments, the wearable accessory device and/or the intermediary processing device may be configured to couple with the XR device 600 via a coupling mechanism in electronic communication with a coupling sensor 624, where the coupling sensor 624 can detect when an electronic device becomes physically or electronically coupled with the XR device 600. In some embodiments, the XR device 600 can be configured to couple to a housing (e.g., a portion of frame 604 or temple arms 605), which may include one or more additional coupling mechanisms configured to couple with additional accessory devices. The components shown in Figure 6A can be implemented in hardware, software, firmware, or a combination thereof, including one or more signal-processing components and/or application-specific integrated circuits (ASICs).

The XR device 600 includes mechanical glasses components, including a frame 604 configured to hold one or more lenses (e.g., one or both lenses 606-1 and 606-2). One of ordinary skill in the art will appreciate that the XR device 600 can include additional mechanical components, such as hinges configured to allow portions of the frame 604 of the XR device 600 to be folded and unfolded, a bridge configured to span the gap between the lenses 606-1 and 606-2 and rest on the user's nose, nose pads configured to rest on the bridge of the nose and provide support for the XR device 600, earpieces configured to rest on the user's ears and provide additional support for the XR device 600, temple arms 605 configured to extend from the hinges to the earpieces of the XR device 600, and the like. One of ordinary skill in the art will further appreciate that some examples of the XR device 600 can include none of the mechanical components described herein. For example, smart contact lenses configured to present XR to users may not include any components of the XR device 600.

The lenses 606-1 and 606-2 can be individual displays or display devices (e.g., a waveguide for projected representations). The lenses 606-1 and 606-2 may act together or independently to present an image or series of images to a user. In some embodiments, the lenses 606-1 and 606-2 can operate in conjunction with one or more display projector assemblies 607A and 607B to present image data to a user. While the XR device 600 includes two displays, embodiments of this disclosure may be implemented in XR devices with a single near-eye display (NED) or more than two NEDs.

The XR device 600 includes electronic components, many of which will be described in greater detail below with respect to Figure 6C. Some example electronic components are illustrated in Figure 6A, including sensors 623-1, 623-2, 623-3, 623-4, 623-5, and 623-6, which can be distributed along a substantial portion of the frame 604 of the XR device 600. The different types of sensors are described below in reference to Figure 6C. The XR device 600 also includes a left camera 639A and a right camera 639B, which are located on different sides of the frame 604. And the eyewear device includes one or more processors 648A and 648B (e.g., an integral microprocessor such as an ASIC) that is embedded in a portion of the frame 604.

Figures 6B-1 and 6B-2 show an example visual depiction of the MR device 610 (e.g., a head-mounted display (HMD) 612, also referred to herein as an XR headset, an AR headset, a head-wearable device, or a MR headset). The HMD 612 includes a front body 614 and a frame 616 (e.g., a strap or band) shaped to fit around a user's head. In some embodiments, the front body 614 and/or the frame 616 includes one or more electronic elements for facilitating presentation of and/or interactions with an XR and/or MR system (e.g., displays, processors (e.g., processor 648A-1), IMUs, tracking emitters or detectors, or sensors). In some embodiments, the HMD 612 includes output audio transducers (e.g., an audio transducer 618-1), as shown in Figure 6B-2. In some embodiments, one or more components, such as the output audio transducer(s) 618 and the frame 616, can be configured to attach and detach (e.g., are detachably attachable) to the HMD 612 (e.g., a portion or all of the frame 616 and/or the output audio transducer 618), as shown in Figure 6B-2. In some embodiments, coupling a detachable component to the HMD 612 causes the detachable component to come into electronic communication with the HMD 612. The MR device 610 includes electronic components, many of which will be described in greater detail below with respect to Figure 6C.

Figures 6B-1 and 6B-2 also show that the MR device 610 having one or more cameras, such as the left camera 639A and the right camera 639B, which can be analogous to the left and right cameras on the frame 604 of the XR device 600. In some embodiments, the MR device 610 includes one or more additional cameras (e.g., cameras 639C and 639D), which can be configured to augment image data obtained by the cameras 639A and 639B by providing more information. For example, the camera 639C can be used to supply color information that is not discerned by cameras 639A and 639B. In some embodiments, one or more of the cameras 639A to 639D can include an optional IR cut filter configured to prevent IR light from being received at the respective camera sensors.

The MR device 610 can include a housing 690 storing one or more components of the MR device 610 and/or additional components of the MR device 610. The housing 690 can be a modular electronic device configured to couple with the MR device 610 (or an XR device 600) and supplement and/or extend the capabilities of the MR device 610 (or an XR device 600). For example, the housing 690 can include additional sensors, cameras, power sources, and processors (e.g., processor 648A-2) to improve and/or increase the functionality of the MR device 610. Examples of the different components included in the housing 690 are described below in reference to Figure 6C.

Alternatively, or in addition, in some embodiments, the head-wearable device, such as the MR device 610 and/or the XR device 600, includes or is communicatively coupled to another external device (e.g., a paired device), such as an HIPD 7 (discussed below in reference to Figures 7A-7B) and/or an optional neckband. The optional neckband can couple to the head-wearable device via one or more connectors (e.g., wired or wireless connectors). The head-wearable device and the neckband can operate independently without any wired or wireless connection between them. In some embodiments, the components of the head-wearable device and the neckband are located on one or more additional peripheral devices paired with the head-wearable device, the neckband, or some combination thereof. Furthermore, the neckband is intended to represent any suitable type or form of paired device. Thus, the following discussion of neckbands may also apply to various other paired devices, such as smartwatches, smartphones, wristbands, other wearable devices, handheld controllers, tablet computers, or laptop computers.

In some situations, pairing external devices, such as an intermediary processing device (e.g., an HIPD device 700, an optional neckband, and/or a wearable accessory device) with the head-wearable devices (e.g., an XR device 600 and/or a MR device 610) enables the head-wearable devices to achieve a similar form factor of a pair of glasses while still providing sufficient battery and computational power for expanded capabilities. Some, or all, of the battery power, computational resources, and/or additional features of the head-wearable devices can be provided by a paired device or shared between a paired device and the head-wearable devices, thus reducing the weight, heat profile, and form factor of the head-wearable device overall while allowing the head-wearable device to retain its desired functionality. For example, the intermediary processing device (e.g., the HIPD 700) can allow components that would otherwise be included in a head-wearable device to be included in the intermediary processing device (and/or a wearable device or accessory device), thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computational capacity than might otherwise have been possible on the head-wearable devices standing alone. Because weight carried in the intermediary processing device can be less invasive to a user than weight carried in the head-wearable devices, a user may tolerate wearing a lighter eyewear device and carrying or wearing the paired device for greater lengths of time than the user would tolerate wearing a heavier eyewear device standing alone, thereby enabling an XR environment to be incorporated more fully into a user's day-to-day activities.

In some embodiments, the intermediary processing device is communicatively coupled with the head-wearable device and/or to other devices. The other devices may provide certain functions (e.g., tracking, localizing, depth mapping, processing, and/or storage) to the head-wearable device. In some embodiments, the intermediary processing device includes a controller and a power source. In some embodiments, sensors of the intermediary processing device are configured to sense additional data that can be shared with the head-wearable devices in an electronic format (analog or digital).

The controller of the intermediary processing device processes information generated by the sensors on the intermediary processing device and/or the head-wearable devices. The intermediary processing device, such as an HIPD 700, can process information generated by one or more of its sensors and/or information provided by other communicatively coupled devices. For example, a head-wearable device can include an IMU, and the intermediary processing device (a neckband and/or an HIPD 700) can compute all inertial and spatial calculations from the IMUs located on the head-wearable device. Additional examples of processing performed by a communicatively coupled device, such as the HIPD 700, are provided below in reference to Figures 7A and 7B.

XR systems may include a variety of types of visual feedback mechanisms. For example, display devices in the XR devices 600 and/or the MR devices 610 may include one or more liquid-crystal displays (LCDs), light-emitting diode (LED) displays, organic LED (OLED) displays, and/or any other suitable type of display screen. XR systems may include a single display screen for both eyes or may provide a display screen for each eye, which may allow for additional flexibility for varifocal adjustments or for correcting a refractive error associated with the user's vision. Some XR systems also include optical subsystems having one or more lenses (e.g., conventional concave or convex lenses, Fresnel lenses, or adjustable liquid lenses) through which a user may view a display screen. In addition to or instead of using display screens, some XR systems include one or more projection systems. For example, display devices in the XR device 600 and/or the MR device 610 may include micro-LED projectors that project light (e.g., using a waveguide) into display devices, such as clear combiner lenses that allow ambient light to pass through. The display devices may refract the projected light toward a user's pupil and may enable a user to simultaneously view both XR content and the real world. XR systems may also be configured with any other suitable type or form of image projection system. As noted, some XR systems may, instead of blending an artificial reality with actual reality, substantially replace one or more of a user's sensory perceptions of the real world with a virtual experience.

While the example head-wearable devices are respectively described herein as the XR device 600 and the MR device 610, either or both of the example head-wearable devices described herein can be configured to present fully immersive MR scenes presented in substantially all of a user's field of view, additionally or alternatively to, subtler augmented-reality scenes that are presented within a portion, less than all, of the user's field of view.

In some embodiments, the XR device 600 and/or the MR device 610 can include haptic feedback systems. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback can be implemented using motors, piezoelectric actuators, fluidic systems, and/or a variety of other types of feedback mechanisms. The haptic feedback systems may be implemented independently of other XR devices, within other XR devices, and/or in conjunction with other XR devices (e.g., wrist-wearable devices that may be incorporated into headwear, gloves, body suits, handheld controllers, environmental devices (e.g., chairs or floormats), and/or any other type of device or system, such as a wrist-wearable device 500, an HIPD 700, a smart textile-based garment), and/or other devices described herein.

Figure 6C illustrates a computing system 620 and an optional housing 690, each of which shows components that can be included in a head-wearable device (e.g., the XR device 600 and/or the MR device 610). In some embodiments, more or fewer components can be included in the optional housing 690 depending on practical restraints of the respective head-wearable device being described. Additionally or alternatively, the optional housing 690 can include additional components to expand and/or augment the functionality of a head-wearable device.

In some embodiments, the computing system 620 and/or the optional housing 690 can include one or more peripheral interfaces 622A and 622B, one or more power systems 642A and 642B (including charger input 643, PMIC 644, and battery 645), one or more controllers 646A and 646B (including one or more haptic controllers 647), one or more processors 648A and 648B (as defined above, including any of the examples provided), and memory 650A and 650B, which can all be in electronic communication with one another. For example, the one or more processors 648A and/or 648B can be configured to execute instructions stored in the memory 650A and/or 650B, which can cause a controller of the one or more controllers 646A and/or 646B to cause operations to be performed at one or more peripheral devices of the peripherals interfaces 622A and/or 622B. In some embodiments, each operation described can occur based on electrical power provided by the power system 642A and/or 642B.

In some embodiments, the peripherals interface 622A can include one or more devices configured to be part of the computing system 620, many of which have been defined above and/or described with respect to wrist-wearable devices shown in Figures 5A and 5B. For example, the peripherals interface can include one or more sensors 623A. Some example sensors include one or more coupling sensors 624, one or more acoustic sensors 625, one or more imaging sensors 626, one or more EMG sensors 627, one or more capacitive sensors 628, and/or one or more IMUs 629. In some embodiments, the sensors 623A further include depth sensors 667, light sensors 668, and/or any other types of sensors defined above or described with respect to any other embodiments discussed herein.

In some embodiments, the peripherals interface can include one or more additional peripheral devices, including one or more NFC devices 630, one or more GPS devices 631, one or more LTE devices 632, one or more Wi-Fi and/or Bluetooth devices 633, one or more buttons 634 (e.g., including buttons that are slidable or otherwise adjustable), one or more displays 635A, one or more speakers 636A, one or more microphones 637A, one or more cameras 638A (e.g., including the first camera 639-1 through nth camera 639-n, which are analogous to the left camera 639A and/or the right camera 639B), one or more haptic devices 640, and/or any of the other peripheral devices defined above or described with respect to any other embodiments discussed herein.

The head-wearable devices can include a variety of types of visual feedback mechanisms (e.g., presentation devices). For example, display devices in the XR device 600 and/or the MR device 610 can include one or more liquid-crystal displays (LCDs), light-emitting diode (LED) displays, organic LED (OLED) displays, micro-LEDs, and/or any other suitable types of display screens. The head-wearable devices can include a single display screen (e.g., configured to be seen by both eyes) and/or can provide separate display screens for each eye, which can allow for additional flexibility for varifocal adjustments and/or for correcting a refractive error associated with the user's vision. Some embodiments of the head-wearable devices also include optical subsystems having one or more lenses (e.g., conventional concave or convex lenses, Fresnel lenses, or adjustable liquid lenses) through which a user can view a display screen. For example, respective displays 635A can be coupled to each of the lenses 606-1 and 606-2 of the XR device 600. The displays 635A coupled to each of the lenses 606-1 and 606-2 can act together or independently to present an image or series of images to a user. In some embodiments, the XR device 600 and/or the MR device 610 includes a single display 635A (e.g., a near-eye display) or more than two displays

In some embodiments, a first set of one or more displays 635A can be used to present an augmented-reality environment, and a second set of one or more display devices 635A can be used to present a MR environment. In some embodiments, one or more waveguides are used in conjunction with presenting XR content to the user of the XR device 600 and/or the MR device 610 (e.g., as a means of delivering light from a display projector assembly and/or one or more displays 635A to the user's eyes). In some embodiments, one or more waveguides are fully or partially integrated into the XR device 600 and/or the MR device 610. Additionally, or alternatively, to display screens, some XR systems include one or more projection systems. For example, display devices in the XR device 600 and/or the MR device 610 can include micro-LED projectors that project light (e.g., using a waveguide) into display devices, such as clear combiner lenses that allow ambient light to pass through. The display devices can refract the projected light toward a user's pupil and can enable a user to simultaneously view both XR content and the real world. The head-wearable devices can also be configured with any other suitable type or form of image projection system. In some embodiments, one or more waveguides are provided, additionally or alternatively, to the one or more display(s) 635A.

In some embodiments of the head-wearable devices, ambient light and/or a real-world live view (e.g., a live feed of the surrounding environment that a user would normally see) can be passed through a display element of a respective head-wearable device presenting aspects of the XR system. In some embodiments, ambient light and/or the real-world live view can be passed through a portion, less than all, of a XR environment presented within a user's field of view (e.g., a portion of the XR environment co-located with a physical object in the user's real-world environment that is within a designated boundary (e.g., a guardian boundary) configured to be used by the user while they are interacting with the XR environment). For example, a visual user interface element (e.g., a notification user interface element) can be presented at the head-wearable devices, and an amount of ambient light and/or the real-world live view (e.g., 15%-50% of the ambient light and/or the real-world live view) can be passed through the user interface element, such that the user can distinguish at least a portion of the physical environment over which the user interface element is being displayed.

The head-wearable devices can include one or more external displays 635A for presenting information to users. For example, an external display 635A can be used to show a current battery level, network activity (e.g., connected, disconnected), current activity (e.g., playing a game, on a call, in a meeting, or watching a movie), and/or other relevant information. In some embodiments, the external displays 635A can be used to communicate with others. For example, a user of the head-wearable device can cause the external displays 635A to present a "do not disturb" notification. The external displays 635A can also be used by the user to share any information captured by the one or more components of the peripherals interface and/or generated by the head-wearable device (e.g., during operation and/or performance of one or more applications).

The memory 650A can include instructions and/or data executable by one or more processors 648A (and/or processors 648B of the housing 690) and/or a memory controller of the one or more controllers 646A (and/or controller 646B of the housing 690). The memory 650A can include one or more operating systems 651, one or more applications 652, one or more communication interface modules 653A, one or more graphics modules 654A, one or more XR processing modules 655A, one or more eye relief adjustment modules 656 for adjusting an eye relief depth and indicating the eye relief depth to the wearer, and/or any other types of modules or components defined above or described with respect to any other embodiments discussed herein.

The data 660 stored in memory 650A can be used in conjunction with one or more of the applications and/or programs discussed above. The data 660 can include profile data 661, sensor data 662, media content data 663, XR application data 664, eye relief data 665 for adjusting an eye relief depth and indicating the eye relief depth to the wearer; and/or any other types of data defined above or described with respect to any other embodiments discussed herein.

In some embodiments, the controller 646A of the head-wearable devices processes information generated by the sensors 623A on the head-wearable devices and/or another component of the head-wearable devices and/or communicatively coupled with the head-wearable devices (e.g., components of the housing 690, such as components of peripherals interface 622B). For example, the controller 646A can process information from the acoustic sensors 625 and/or image sensors 626. For each detected sound, the controller 646A can perform a direction of arrival (DOA) estimation to estimate a direction from which the detected sound arrived at a head-wearable device. As one or more of the acoustic sensors 625 detect sounds, the controller 646A can populate an audio data set with the information (e.g., represented by sensor data 662).

In some embodiments, a physical electronic connector can convey information between the head-wearable devices and another electronic device, and/or between one or more processors 648A of the head-wearable devices and the controller 646A. The information can be in the form of optical data, electrical data, wireless data, or any other transmittable data form. Moving the processing of information generated by the head-wearable devices to an intermediary processing device can reduce weight and heat in the eyewear device, making it more comfortable and safer for a user. In some embodiments, an optional accessory device (e.g., an electronic neckband or an HIPD 700) is coupled to the head-wearable devices via one or more connectors. The connectors can be wired or wireless and can include electrical and/or non-electrical (e.g., structural) components. In some embodiments, the head-wearable devices and the accessory device can operate independently without any wired or wireless connection between them.

The head-wearable devices can include various types of computer vision components and subsystems. For example, the XR device 600 and/or the MR device 610 can include one or more optical sensors such as two-dimensional (2D) or three-dimensional (3D) cameras, time-of-flight depth sensors, single-beam or sweeping laser rangefinders, 3D LiDAR sensors, and/or any other suitable type or form of optical sensor. A head-wearable device can process data from one or more of these sensors to identify a location of a user and/or aspects of the user's real-world physical surroundings, including the locations of real-world objects within the real-world physical surroundings. In some embodiments, the methods described herein are used to map the real world, to provide a user with context about real-world surroundings, and/or to generate interactable virtual objects (which can be replicas or digital twins of real-world objects that can be interacted with an XR environment), among a variety of other functions. For example, Figures 6B-1 and 6B-2 show the MR device 610 having cameras 639A-639D, which can be used to provide depth information for creating a voxel field and a 2D mesh to provide object information to the user to avoid collisions.

The optional housing 690 can include analogous components to those described above with respect to the computing system 620. For example, the optional housing 690 can include a respective peripherals interface 622B, including more or fewer components to those described above with respect to the peripherals interface 622A. As described above, the components of the optional housing 690 can be used to augment and/or expand on the functionality of the head-wearable devices. For example, the optional housing 690 can include respective sensors 623B, speakers 636B, displays 635B, microphones 637B, cameras 638B, and/or other components to capture and/or present data. Similarly, the optional housing 690 can include one or more processors 648B, controllers 646B, and/or memory 650B (including respective communication interface modules 653B, one or more graphics modules 654B, one or more AR processing modules 655B) that can be used individually and/or in conjunction with the components of the computing system 620.

The techniques described above in Figures 6A-6C can be used with different head-wearable devices. In some embodiments, the head-wearable devices (e.g., the XR device 600 and/or the MR device 610) can be used in conjunction with one or more wearable devices such as a wrist-wearable device 500 (or components thereof). Having thus described example head-wearable devices, attention will now be turned to example handheld intermediary processing devices, such as HIPD 700.

### Example Handheld Intermediary Processing Devices

Figures 7A and 7B illustrate an example handheld intermediary processing device (HIPD) 700, in accordance with some embodiments. The HIPD 700 can perform various functions and/or operations associated with navigating through user interfaces and selectively opening applications, as well as the functions and/or operations described above in reference to Figures 4A-4C-2.

Figure 7A shows a top view 705 and a side view 725 of the HIPD 700. The HIPD 700 is configured to communicatively couple with one or more wearable devices (or other electronic devices) associated with a user. For example, the HIPD 700 is configured to communicatively couple with a user's wrist-wearable device 500 (or components thereof, such as the watch body 520 and the wearable band 510), XR device 600, and/or MR device 610. The HIPD 700 can be configured to be held by a user (e.g., as a handheld controller), carried on the user's person (e.g., in their pocket or in their bag), placed in proximity of the user (e.g., placed on their desk while seated at their desk or on a charging dock), and/or placed at or within a predetermined distance from a wearable device or other electronic device (e.g., where, in some embodiments, the predetermined distance is the maximum distance (e.g., 10 meters) at which the HIPD 700 can successfully be communicatively coupled with an electronic device, such as a wearable device).

The HIPD 700 can perform various functions independently and/or in conjunction with one or more wearable devices (e.g., wrist-wearable device 500, XR device 600, and/or MR device 610). The HIPD 700 is configured to increase and/or improve the functionality of communicatively coupled devices, such as the wearable devices. The HIPD 700 is configured to perform one or more functions or operations associated with interacting with user interfaces and applications of communicatively coupled devices, interacting with an XR environment, interacting with a MR environment, and/or operating as a human-machine interface controller, as well as functions and/or operations. Additionally, as will be described in greater detail below, functionality and/or operations of the HIPD 700 can include, without limitation, task offloading and/or handoffs, thermals offloading and/or handoffs, 6 degrees of freedom (6DoF) raycasting and/or gaming (e.g., using imaging devices or cameras 714A and 714B, which can be used for simultaneous localization and mapping (SLAM), and/or with other image processing techniques), portable charging; messaging, image capturing via one or more imaging devices or cameras (e.g., cameras 722A and 722B), sensing user input (e.g., sensing a touch on a multi-touch input surface 702), wireless communications and/or interlining (e.g., cellular, near field, Wi-Fi, or personal area network), location determination, financial transactions, providing haptic feedback, alarms, notifications, biometric authentication, health monitoring, sleep monitoring. The above-example functions can be executed independently in the HIPD 700 and/or in communication between the HIPD 700 and another wearable device described herein. In some embodiments, functions can be executed on the HIPD 700 in conjunction with an XR environment. As the skilled artisan will appreciate upon reading the descriptions provided herein, the novel HIPD 700 described herein can be used with any type of suitable XR environment.

While the HIPD 700 is communicatively coupled with a wearable device and/or other electronic device, the HIPD 700 is configured to perform one or more operations initiated at the wearable device and/or the other electronic device. In particular, one or more operations of the wearable device and/or the other electronic device can be offloaded to the HIPD 700 to be performed. The HIPD 700 performs one or more operations of the wearable device and/or the other electronic device and provides data corresponding to the completed operations to the wearable device and/or the other electronic device. For example, a user can initiate a video stream using the XR device 600 and back-end tasks associated with performing the video stream (e.g., video rendering) can be offloaded to the HIPD 700, which the HIPD 700 performs and provides corresponding data to the XR device 600 to perform remaining front-end tasks associated with the video stream (e.g., presenting the rendered video data via a display of the XR device 600). In this way, the HIPD 700, which has more computational resources and greater thermal headroom than a wearable device, can perform computationally intensive tasks for the wearable device, improving performance of an operation performed by the wearable device.

The HIPD 700 includes a multi-touch input surface 702 on a first side (e.g., a front surface) that is configured to detect one or more user inputs. In particular, the multi-touch input surface 702 can detect single-tap inputs, multi-tap inputs, swipe gestures and/or inputs, force-based and/or pressure-based touch inputs, held taps, and the like. The multi-touch input surface 702 is configured to detect capacitive touch inputs and/or force (and/or pressure) touch inputs. The multi-touch input surface 702 includes a first touch-input surface 704 defined by a surface depression and a second touch-input surface 706 defined by a substantially planar portion. The first touch-input surface 704 can be disposed adjacent to the second touch-input surface 706. In some embodiments, the first touch-input surface 704 and the second touch-input surface 706 can be different dimensions, shapes, and/or cover different portions of the multi-touch input surface 702. For example, the first touch-input surface 704 can be substantially circular and the second touch-input surface 706 is substantially rectangular. In some embodiments, the surface depression of the multi-touch input surface 702 is configured to guide user handling of the HIPD 700. In particular, the surface depression is configured such that the user holds the HIPD 700 upright when held in a single hand (e.g., such that the using imaging devices or cameras 714A and 714B are pointed toward a ceiling or the sky). Additionally, the surface depression is configured such that the user's thumb rests within the first touch-input surface 704.

In some embodiments, the different touch-input surfaces include a plurality of touch-input zones. For example, the second touch-input surface 706 includes at least a first touch-input zone 708 within a second touch-input zone 706 and a third touch-input zone 710 within the first touch-input zone 708. In some embodiments, one or more of the touch-input zones are optional and/or user-defined (e.g., a user can specific a touch-input zone based on their preferences). In some embodiments, each touch-input surface and/or touch-input zone is associated with a predetermined set of commands. For example, a user input detected within the first touch-input zone 708 causes the HIPD 700 to perform a first command and a user input detected within the second touch-input zone 706 causes the HIPD 700 to perform a second command distinct from the first. In some embodiments, different touch-input surfaces and/or touch-input zones are configured to detect one or more types of user inputs. The different touch-input surfaces and/or touch-input zones can be configured to detect the same or distinct types of user inputs. For example, the first touch-input zone 708 can be configured to detect force touch inputs (e.g., a magnitude at which the user presses down) and capacitive touch inputs, and the second touch-input zone 706 can be configured to detect capacitive touch inputs.

The HIPD 700 includes one or more sensors 751 for sensing data used in the performance of one or more operations and/or functions. For example, the HIPD 700 can include an IMU that is used in conjunction with cameras 714 for three-dimensional object manipulation (e.g., enlarging, moving, destroying, etc. an object) in an AR or MR environment. Among the nonlimiting examples of the sensors 751 the HIPD 700 are a light sensor, a magnetometer, a depth sensor, a pressure sensor, and a force sensor. Additional examples of the sensors 751 are provided below in reference to Figure 7B.

The HIPD 700 can include one or more light indicators 712 to provide one or more notifications to the user. In some embodiments, the light indicators are LEDs or other types of illumination devices. The light indicators 712 can operate as a privacy light to notify the user and/or others near the user that an imaging device and/or microphone is active. In some embodiments, a light indicator is positioned adjacent to one or more touch-input surfaces. For example, a light indicator can be positioned around the first touch-input surface 704. The light indicators can be illuminated in different colors and/or patterns to provide the user with one or more notifications and/or information about the device. For example, a light indicator positioned around the first touch-input surface 704 can flash when the user receives a notification (e.g., a message), change to red when the HIPD 700 is out of power, operate as a progress bar (e.g., a light ring that is closed when a task is completed (e.g., 0% to 100%)), operates as a volume indicator, etc.

In some embodiments, the HIPD 700 includes one or more additional sensors on another surface. For example, as shown in Figure 7A, HIPD 700 includes a set of one or more sensors (e.g., sensor set 720) on an edge of the HIPD 700. The sensor set 720, when positioned on an edge of the HIPD 700, can be pe positioned at a predetermined tilt angle (e.g., 26 degrees), which allows the sensor set 720 to be angled toward the user when placed on a desk or other flat surface. Alternatively, in some embodiments, the sensor set 720 is positioned on a surface opposite the multi-touch input surface 702 (e.g., a back surface). The one or more sensors of the sensor set 720 are discussed in detail below.

The side view 725 of the of the HIPD 700 shows the sensor set 720 and camera 714B. The sensor set 720 includes one or more cameras 722A and 722B, a depth projector 724, an ambient light sensor 728, and a depth receiver 730. In some embodiments, the sensor set 720 includes a light indicator 726. The light indicator 726 can operate as a privacy indicator to let the user and/or those around them know that a camera and/or microphone is active. The sensor set 720 is configured to capture a user's facial expression such that the user can puppet a custom avatar (e.g., showing emotions, such as smiles, laughter, etc., on the avatar or a digital representation of the user). The sensor set 720 can be configured as a side stereo RGB system, a rear indirect time-of-flight (iToF) system, or a rear stereo RGB system. As the skilled artisan will appreciate upon reading the descriptions provided herein, the novel HIPD 700 described herein can use different sensor set 720 configurations and/or sensor set 720 placement.

In some embodiments, the HIPD 700 includes one or more haptic devices 771 (Figure 7B; e.g., a vibratory haptic actuator) that are configured to provide haptic feedback (e.g., kinesthetic sensation). The sensors 751, and/or the haptic devices 771 can be configured to operate in conjunction with multiple applications and/or communicatively coupled devices including, without limitation, wearable devices, health monitoring applications, social media applications, game applications, and artificial reality applications (e.g., the applications associated with artificial reality).

The HIPD 700 is configured to operate without a display. However, in optional embodiments, the HIPD 700 can include a display 768 (Figure 7B). The HIPD 700 can also income one or more optional peripheral buttons 767 (Figure 7B). For example, the peripheral buttons 767 can be used to turn on or turn off the HIPD 700. Further, the HIPD 700 housing can be formed of polymers and/or elastomer elastomers. The HIPD 700 can be configured to have a non-slip surface to allow the HIPD 700 to be placed on a surface without requiring a user to watch over the HIPD 700. In other words, the HIPD 700 is designed such that it would not easily slide off a surfaces. In some embodiments, the HIPD 700 include one or magnets to couple the HIPD 700 to another surface. This allows the user to mount the HIPD 700 to different surfaces and provide the user with greater flexibility in use of the HIPD 700.

As described above, the HIPD 700 can distribute and/or provide instructions for performing the one or more tasks at the HIPD 700 and/or a communicatively coupled device. For example, the HIPD 700 can identify one or more back-end tasks to be performed by the HIPD 700 and one or more front-end tasks to be performed by a communicatively coupled device. While the HIPD 700 is configured to offload and/or hand off tasks of a communicatively coupled device, the HIPD 700 can perform both back-end and front-end tasks (e.g., via one or more processors, such as CPU 777; Figure 7B). The HIPD 700 can, without limitation, can be used to perform augmenting calling (e.g., receiving and/or sending 3D or 2.5D live volumetric calls, live digital human representation calls, and/or avatar calls), discreet messaging, 6DoF portrait/landscape gaming, AR/MR object manipulation, AR/MR content display (e.g., presenting content via a virtual display), and/or other AR/MR interactions. The HIPD 700 can perform the above operations alone or in conjunction with a wearable device (or other communicatively coupled electronic device).

Figure 7B shows block diagrams of a computing system 740 of the HIPD 700, in accordance with some embodiments. The HIPD 700, described in detail above, can include one or more components shown in HIPD computing system 740. The HIPD 700 will be understood to include the components shown and described below for the HIPD computing system 740. In some embodiments, all or a substantial portion of the components of the HIPD computing system 740 are included in a single integrated circuit. Alternatively, in some embodiments, components of the HIPD computing system 740 are included in a plurality of integrated circuits that are communicatively coupled.

The HIPD computing system 740 can include a processor (e.g., a CPU 777, a GPU, and/or a CPU with integrated graphics), a controller 775, a peripherals interface 750 that includes one or more sensors 751 and other peripheral devices, a power source (e.g., a power system 795), and memory (e.g., a memory 778) that includes an operating system (e.g., an operating system 779), data (e.g., data 788), one or more applications (e.g., applications 780), and one or more modules (e.g., a communications interface module 781, a graphics module 782, a task and processing management module 783, an interoperability module 784, an AR processing module 785, a data management module 786, etc.). The HIPD computing system 740 further includes a power system 795 that includes a charger input and output 796, a PMIC 797, and a battery 798, all of which are defined above.

In some embodiments, the peripherals interface 750 can include one or more sensors 751. The sensors 751 can include analogous sensors to those described above in reference to Figures 5B. For example, the sensors 751 can include imaging sensors 754, (optional) EMG sensors 756, IMUs 758, and capacitive sensors 760. In some embodiments, the sensors 751 can include one or more pressure sensor 752 for sensing pressure data, an altimeter 753 for sensing an altitude of the HIPD 700, a magnetometer 755 for sensing a magnetic field, a depth sensor 757 (or a time-of-flight sensor) for determining a difference between the camera and the subject of an image, a position sensor 759 (e.g., a flexible position sensor) for sensing a relative displacement or position change of a portion of the HIPD 700, a force sensor 761 for sensing a force applied to a portion of the HIPD 700, and a light sensor 762 (e.g., an ambient light sensor) for detecting an amount of lighting. The sensors 751 can include one or more sensors not shown in Figure 7B.

Analogous to the peripherals described above in reference to Figures 5B, the peripherals interface 750 can also include an NFC component 763, a GPS component 764, an LTE component 765, a Wi-Fi and/or Bluetooth communication component 766, a speaker 769, a haptic device 771, and a microphone 773. As described above in reference to Figure 7A, the HIPD 700 can optionally include a display 768 and/or one or more buttons 767. The peripherals interface 750 can further include one or more cameras 770, touch surfaces 772, and/or one or more light emitters 774. The multi-touch input surface 702 described above in reference to Figure 7A is an example of touch surface 772. The light emitters 774 can be one or more LEDs, lasers, etc. and can be used to project or present information to a user. For example, the light emitters 774 can include light indicators 712 and 726 described above in reference to Figure 7A. The cameras 770 (e.g., cameras 714A, 714B, and 722 described in reference to Figure 7A) can include one or more wide angle cameras, fish-eye cameras, spherical cameras, compound eye cameras (e.g., stereo and multi cameras), depth cameras, RGB cameras, ToF cameras, RGB-D cameras (depth and ToF cameras), and/or other available cameras. Cameras 770 can be used for SLAM; 6DoF ray casting, gaming, object manipulation, and/or other rendering; facial recognition and facial expression recognition, etc.

Similar to the watch body computing system 560 and the watch band computing system 530 described above in reference to Figure 5B, the HIPD computing system 740 can include one or more haptic controllers 776 and associated componentry (e.g., haptic devices 771) for providing haptic events at the HIPD 700.

Memory 778 can include high-speed random-access memory and/or non-volatile memory, such as one or more magnetic disk storage devices, flash memory devices, or other non-volatile solid-state memory devices. Access to the memory 778 by other components of the HIPD 700, such as the one or more processors and the peripherals interface 750, can be controlled by a memory controller of the controllers 775.

In some embodiments, software components stored in the memory 778 include one or more operating systems 779, one or more applications 780, one or more communications interface modules 781, one or more graphics modules 782, one or more data management modules 785, which are analogous to the software components described above in reference to Figure 5B.

In some embodiments, software components stored in the memory 778 include a task and processing management module 783 for identifying one or more front-end and back-end tasks associated with an operation performed by the user, performing one or more front-end and/or back-end tasks, and/or providing instructions to one or more communicatively coupled devices that cause performance of the one or more front-end and/or back-end tasks. In some embodiments, the task and processing management module 783 uses data 788 (e.g., device data 790) to distribute the one or more front-end and/or back-end tasks based on communicatively coupled devices' computing resources, available power, thermal headroom, ongoing operations, and/or other factors. For example, the task and processing management module 783 can cause the performance of one or more back-end tasks (of an operation performed at communicatively coupled XR device 600) at the HIPD 700 in accordance with a determination that the operation is utilizing a predetermined amount (e.g., at least 70%) of computing resources available at the XR device 600.

In some embodiments, software components stored in the memory 778 include an interoperability module 784 for exchanging and utilizing information received and/or provided to distinct communicatively coupled devices. The interoperability module 784 allows for different systems, devices, and/or applications to connect and communicate in a coordinated way without user input. In some embodiments, software components stored in the memory 778 include an XR module 785 that is configured to process signals based at least on sensor data for use in an AR and/or MR environment. For example, the XR processing module 785 can be used for 3D object manipulation, gesture recognition, facial and facial expression, recognition, etc.

The memory 778 can also include data 787, including structured data. In some embodiments, the data 787 can include profile data 789, device data 789 (including device data of one or more devices communicatively coupled with the HIPD 700, such as device type, hardware, software, configurations, etc.), sensor data 791, media content data 792, and application data 793.

It should be appreciated that the HIPD computing system 740 is an example of a computing system within the HIPD 700, and that the HIPD 700 can have more or fewer components than shown in the HIPD computing system 740, combine two or more components, and/or have a different configuration and/or arrangement of the components. The various components shown in HIPD computing system 740 are implemented in hardware, software, firmware, or a combination thereof, including one or more signal-processing and/or application-specific integrated circuits.

The techniques described above in Figure 7A-7B can be used with any device that serves as a human-machine interface controller. In some embodiments, an HIPD 700 can be used in conjunction with one or more wearable device such as a head-wearable device (e.g., XR device 600 and MR device 610) and/or a wrist-wearable device 500 (or components thereof).

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that although the terms "first," "second," etc., may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components and/or groups thereof.

As used herein, the term "if' can be construed to mean "when" or "upon" or "in response to determining" or "in accordance with a determination" or "in response to detecting" [that a stated condition precedent is true], depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purposes of explanation, has been described in reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A head-wearable device, comprising:
a lens system, and
a facial interface, comprising:
a portion configured to be coupled with the lens system via an adjustment assembly, and
a facial-interface portion configured to be in contact with a wearer's face, wherein,
the adjustment assembly is configured to move the facial-interface portion relative to the lens system to adjust a depth between a lens of the lens system and the wearer's face, including adjusting the depth to:
(i) a first depth, configured to accommodate a first facial profile associated with a first wearer, and
(ii) a second depth, configured to accommodate a second facial profile associated with a second wearer,
wherein the first facial profile is distinct from the second facial profile; and
a button configured to:
move the facial-interface portion relative to the lens system when the button is pressed, and
maintain a position of the facial-interface portion relative to the lens system when the button is released,
wherein the button is located on an interior surface of the facial interface, wherein the interior surface of the facial interface is a surface that faces a wearer when the head-wearable device is donned by a wearer.

2. The head-wearable device of claim 1, wherein the adjustment assembly is located at a first side of the facial interface, and the first side corresponds to a left side of a wearer's face, and the head-wearable device further comprises:
a second adjustment assembly, located opposite of the adjustment assembly, such that the second adjustment assembly is located at a second side of the facial interface, and the second side corresponds to a right side of a wearer's face.

3. The head-wearable device of claim 1 or claim 2, wherein:
the adjustment assembly further comprises at least one actuator configured to move the facial-interface portion relative to the lens system.

4. The head-wearable device of any preceding claim, wherein the adjustment assembly further comprises two hooks and a dowel coupled to a spring, wherein:
the dowel is configured to move between the two hooks when the spring is compressed to move the facial interface relative to the lens system, wherein:
(i) when the dowel is located within a first hook of two hooks, the dowel is associated with the first depth, and
(ii) when the dowel is located within a second hook of the two hooks, the dowel located within the second hook is associated with the second depth;
optionally, wherein the dowel, the spring, and the two hooks are configured to not be visible when the head-wearable device is donned.

5. The head-wearable device of claim 4, wherein the lens system and the facial interface are made of a first material, and the dowel, the spring, and the two hooks are made of a second material.

6. The head-wearable device of claim 5, wherein the first material is a metal material.

7. The head-wearable device of claim 5 or claim 5, wherein the second material is a thermoplastic material.

8. The head-wearable device of any preceding claim, wherein the depth between the lens of the lens system and the rear portion of the facial interface determines an eye relief between the lens system and a wearer's eye.

9. A facial interface, comprising:
a portion configured to be coupled with a lens system via an adjustment assembly, and
a facial-interface portion configured to be in contact with a wearer's face, wherein,
the adjustment assembly is configured to move the facial-interface portion relative to the lens system which changes a depth between a lens of the lens system and the wearer's face, including adjusting the depth to:
(i) a first depth, configured to accommodate a first facial profile associated with a first wearer, and
(ii) a second depth, configured to accommodate a second facial profile associated with a second wearer,
wherein the first facial profile is distinct from the second facial profile, and
a button configured to:
move the facial-interface portion relative to the lens system when the button is pressed, and
maintain a position of the facial-interface portion relative to the lens system when the button is released,
wherein the button is located on an interior surface of the facial interface, wherein the interior surface of the facial interface is a surface that faces a wearer when the head-wearable device is donned by a wearer.

10. A method of adjusting eye relief for a facial interface, the method comprising:
at a head-wearable device that comprises a facial-interface portion that is configured to be in contact with a wearer's face, and a lens system that is configured to be moved relative to the facial interface via an adjustment assembly:
moving the facial-interface portion of the head-wearable device relative to the lens system of the head-wearable device via the adjustment assembly to a first depth, wherein the first depth is configured to accommodate a first facial profile associated with a first wearer; and
moving the facial-interface portion of the head-wearable device relative to the lens system of the head-wearable device via the adjustment assembly to a second depth, wherein the second depth is configured to accommodate a second facial profile associated with a second wearer, wherein:
the first facial profile is distinct from the second facial profile, and
a button configured to:
move the facial-interface portion relative to the lens system when the button is pressed, and
maintain a position of the facial-interface portion relative to the lens system when the button is released,
wherein the button is located on an interior surface of the facial interface, wherein the interior surface of the facial interface is a surface that faces a wearer when the head-wearable device is donned by a wearer.

11. The method of claim 10, wherein:
the adjustment assembly is located at a first side of the facial interface, and the first side corresponds to a left side of a wearer's face, and wherein the head-wearable device further comprises:
a second adjustment assembly, located opposite of the adjustment assembly, such that the second adjustment assembly is located at a second side of the facial interface, and the second side corresponds to a right side of a wearer's face.

12. The method of claim 10 or claim 11, wherein:
the adjustment assembly further comprises at least one actuator configured to move the facial-interface portion relative to the lens system.

13. The method of any one of claims 10 to 12, wherein the adjustment assembly further comprises two hooks and a dowel coupled to a spring, wherein:
the dowel is configured move between the two hooks when the spring is compressed to move the facial interface relative to the lens system, wherein:
(i) when the dowel is located within a first hook of two hooks, the dowel is associated with the first depth, and
(ii) when the dowel is located within a second hook of the two hooks, the dowel located within the second hook is associated with the second depth.

14. The method of claim 13, wherein the dowel, the spring, and the two hooks are configured to not be visible when the head-wearable device is donned.

15. The method of claim 13 or claim 14, wherein the lens system and the facial interface are made of a first material, and the dowel, the spring, and the two hooks are made of a second material;
optionally, wherein the first material is a metal material;
optionally, wherein the second material is a thermoplastic material.
